(19) Europäisches Patentamt / European Patent Office / Office européen des brevets

(11) **EP 4 427 921 A1**

(12) **EUROPEAN PATENT APPLICATION**

(43) Date of publication:
**11.09.2024 Bulletin 2024/37**

(21) Application number: **24154859.3**

(22) Date of filing: **30.01.2024**

(51) International Patent Classification (IPC):
**B32B 3/26** *(2006.01)*    **B32B 5/02** *(2006.01)*
**B32B 5/18** *(2006.01)*    **B32B 5/24** *(2006.01)*
**B32B 7/09** *(2019.01)*    **B32B 7/12** *(2006.01)*

(52) Cooperative Patent Classification (CPC):
**B32B 5/245; B32B 3/266; B32B 5/022;**
**B32B 5/026; B32B 5/18; B32B 7/09; B32B 7/12;**
B32B 2262/0253; B32B 2262/0261;
B32B 2262/0276; B32B 2262/04; B32B 2262/062;
B32B 2262/08; B32B 2266/0221; B32B 2307/72;

(Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **09.03.2023 CN 202310257527**

(71) Applicant: **Honeywell Safety Products USA, Inc.
Charlotte, NC 28202 (US)**

(72) Inventors:
• **ZHOU, Tianqi
Charlotte, 28202 (US)**
• **WANG, Yuyan
Charlotte, 28202 (US)**
• **LIN, Ling
Charlotte, 28202 (US)**
• **GU, Zheng
Charlotte, 28202 (US)**
• **ZHOU, Peng
Charlotte, 28202 (US)**

(74) Representative: **Haseltine Lake Kempner LLP
Cheapside House
138 Cheapside
London EC2V 6BJ (GB)**

(54) **A COMPOSITE CUSHION MATERIAL WITH HIGH BREATHABILITY AND MULTISTEP SUPPORT**

(57)    The invention provides composite cushion materials of high breathability and moisture management, multistep softness, and support and methods of making the composite cushion materials. The first layer of the material comprises a warp-knitted sandwich fabric, the second layer comprises a three-dimensional nonwoven fabric, the third layer comprises a perforated ethylene-vinyl acetate (EVA) foam, and the fourth layer comprises a warp-knitted mesh fabric, wherein the second layer is positioned between the first layer and the third layer, and wherein the third layer is positioned between the second layer and the fourth layer. The composite cushion materials are useful in clothing and equipment for wear in high temperature environments.

FIG. 1A    FIG. 1B    FIG. 1C

EP 4 427 921 A1

(52) Cooperative Patent Classification (CPC): (Cont.)
B32B 2307/724; B32B 2307/7376; B32B 2571/02

**Description**

**BACKGROUND OF THE INVENTION**

Cushions made from flexible closed-cell cellular polymeric materials such as polyurethane (PU) or ethylene-vinyl acetate (EVA) foam are supportive but unbreathable without any through-holes across the material. A traditional three-dimensional (3D)-nonwoven material is breathable and soft but has a lack of support.

Reported in the art are cushions comprising various materials. US20040142619A1 reports a cushion comprising only a three-dimensional spacer fabric. CN211334932U reports a multilayer cushion material comprising an upper knitted mesh layer, a nano silver ion fiber a layer, a sponge layer embedded with elastic hose, a metal fiber layer, and a lower knitted mesh fabric layer, where the layers are sewn together. US20200360210A1 reports a multi-layer support system comprising two 3D spacer fabric layers, a non-viscoelastic layer, and layers comprising foam. WO2012071581A2 reports a composite cushion material comprising a resilient cushion material between synthetic nonwoven fabric layers. CN1799870A: reports a multi-layer cushion comprising a top layer of woven fabric, nonwoven fabric, or knitted fabric, a buffer layer of foam, and a back nonwoven layer. There is a need in the art for composite cushion materials with improved breathability, softness, and support properties.

**BRIEF SUMMARY OF THE CLAIMED INVENTION**

In one aspect, the invention provides a composite cushion material, the composite cushion material comprising four layers, a first layer, a second layer, a third layer, and a fourth layer, wherein the first layer comprises a warp-knitted sandwich fabric comprising a top surface layer, a bottom surface layer and a middle connecting layer, the second layer comprises a three-dimensional (3D) nonwoven fabric, the third layer comprises a perforated ethylene-vinyl acetate (EVA) foam, and the fourth layer comprises a warp-knitted mesh fabric; wherein the second layer is positioned between the first layer and the third layer, and wherein the third layer is positioned between the second layer and the fourth layer.

Some composite cushion materials further comprise a glue between the between the first and second layers, between the second and third layers, and between the third and fourth layers. In some composite cushion materials, the glue comprises organosiloxane or chloroprene rubber (CR) polymer. In some composite cushion materials, the composite cushion material is bonded by pressing.

In some composite cushion materials, the four layers are sewn together with a thread. For example, the thread can be 80TEX polyester thread, 100TEX polyester thread, or 210TEX polyester thread.

In some composite cushion materials, the top surface layer and the bottom surface layer of the warp-knitted sandwich fabric comprise a monofilament yarn, a multifilament yarn, or a staple fiber yarn. For example, the monofilament yarn can comprise polyester, nylon, polypropylene, or polyethylene. For example, the multifilament yarn can comprise polyester, nylon, polypropylene, or polyethylene. For example, the staple fiber yarn can comprise cotton, wool, or viscose.

In some composite cushion materials, the top surface layer and the bottom surface layer of the warp-knitted sandwich fabric comprise a yarn of a linear mass density of about 30D to about 600D.

In some composite cushion materials, the multifilament yarn is 100% polyethylene terephthalate (PET) yarn. In some composite cushion materials, the 100% PET multifilament yarn is of a linear mass density of about 30D.

In some composite cushion materials, the middle connecting layer of the warp-knitted sandwich fabric comprises a multifilament yarn, a monofilament yarn, or a staple fiber yarn. For example, the multifilament yarn can comprise polyester, nylon, polyethylene, or polypropylene. For example, the monofilament yarn can comprise polyethylene terephthalate (PET), thermoplastic polyether ester elastomer (TPEE), polyamine/ thermoplastic polyurethane (PA/TPU), or polypropylene (PP). For example, the staple fiber yarn can comprise cotton, wool, or viscose.

In some composite cushion materials, the middle connecting layer of the warp-knitted sandwich fabric comprises a yarn of a linear mass density of about 30D to about 250D.

In some composite cushion materials, the middle connecting layer of the warp-knitted sandwich fabric comprises a yarn of a diameter of about 0.05 mm to about 0.15 mm.

In some composite cushion materials, the multifilament yarn is 100% polyethylene terephthalate (PET) yarn. In some composite cushion materials, the 100% polyethylene terephthalate (PET) yarn is of a linear mass density of about 150D.

In some composite cushion materials, the warp-knitted sandwich fabric has a thickness of about 1 mm to about 5 mm. For example, the thickness of the warp-knitted sandwich fabric can be about 1.5 mm.

In some composite cushion materials, the warp-knitted sandwich fabric has a pattern selected from the group consisting of plain, rhombic, circular, and comb. For example, the warp-knitted sandwich fabric can have a rhombic pattern.

In some composite cushion materials, the top surface layer and the bottom surface layer of the warp-knitted sandwich fabric comprise 100% PET multifilament yarn of a linear mass density of about 30D, the middle connecting layer comprises 100% PET multifilament yarn of a linear mass density of about 150D, the warp-knitted sandwich fabric has a thickness of about 1.5 mm, and the warp-knitted fabric has a rhombic pattern.

In some composite cushion materials, the 3D nonwoven material comprises a fiber selected from the group consisting of polyester, polyethylene (PE), polypropylene (PP), Poly Lactic Acid (PLA), and viscose. In some composite cushion materials, the 3D nonwoven material comprises polyethylene terephthalate (PET) fiber.

In some composite cushion materials, the 3D nonwoven material has a thickness of about 2 mm to about 100 mm. For example, the thickness of the 3D nonwoven material can be about 20 mm.

In some composite cushion materials, the 3D nonwoven material has a density of about 12 kg/m$^3$ to about 30 kg/m$^3$. For example, the density of the 3D nonwoven material can be about 20 kg/m$^3$. In some composite cushion materials, the 3D nonwoven material comprises 100% PET fiber, has a thickness of about 20 mm, and has a density of about 20 kg/m$^3$.

In some composite cushion materials, the perforated EVA foam has a hardness of about 45HC to about 70HC. For example, the hardness of the perforated EVA foam can be about 45HC.

In some composite cushion materials, the perforated EVA foam has a thickness of about 2 mm to about 20 mm. For example, the thickness of the perforated EVA foam can be about 13 mm.

In some composite cushion materials, the perforated EVA foam has a density before perforation of about 50 kg/m$^3$ to about 200 kg/m$^3$. For example, the density of the perforated EVA foam before perforation can be about 50 kg/m$^3$.

In some composite cushion materials, the perforated EVA foam comprises holes of a diameter of about 4 mm to about 10 mm. For example, the diameter of the holes in the perforated EVA can be about 6±0.6mm. In some composite cushion materials, the perforated EVA foam comprises holes of a pitch of about 6 mm to about 15 mm. For example, the pitch of the holes in the perforated EVA foam can be about 11±1.5mm. For example, the diameter of the holes in the perforated EVA foam can be about 6±0.6mm and the pitch of the holes in the perforated EVA foam can be about 11±1.5mm.

In some composite cushion materials, the perforated EVA foam has a hardness of about 45HC, has a thickness of about 13 mm, has a density before perforation of about 50 kg/m$^3$, and has holes of a diameter of about 6±0.6mm and a pitch of about 11±1.5mm.

In some composite cushion materials, the warp-knitted mesh fabric comprises a monofilament yarn, a multifilament yarn, or a staple fiber yarn. For example, the monofilament yarn can comprise polyethylene terephthalate (PET), thermoplastic polyether ester elastomer (TPEE), polyamine/ thermoplastic polyurethane (PA/TPU), or polypropylene (PP). For example, the multifilament yarn can comprise polyester, nylon, polypropylene, or polyethylene. For example, the staple fiber yarn can comprise cotton, wool, or viscose.

In some composite cushion materials, the warp-knitted mesh fabric comprises a yarn of a linear mass density of about 30D to about 300D. In some composite cushion materials, the warp-knitted mesh fabric comprises a yarn of a diameter of about 0.05 mm to about 0.18 mm.

In some composite cushion materials, the multifilament yarn is 100% polyethylene terephthalate (PET) yarn. In some composite cushion materials, the 100% polyethylene terephthalate (PET) yarn comprises a 300D FDY multifilament yarn and a 75D/72F multifilament yarn.

In some composite cushion materials, the warp-knitted mesh fabric has a thickness of about 0.5 mm to about 2 mm. For example, the thickness of the warp-knitted mesh fabric can be about 0.5 mm.

In some composite cushion materials, the warp-knitted mesh fabric has a pattern selected from the group consisting of rhombic, circular, hexagonal, and comb. For example, the pattern of the warp-knitted mesh fabric can be hexagonal.

In some composite cushion materials, the warp-knitted mesh fabric comprises 100% PET multifilament yarn comprising a 300D FDY multifilament yarn and a 75D/72F multifilament yarn, has a thickness of about 0.5 mm, and has a hexagonal pattern.

In some composite cushion materials, the top surface layer and the bottom surface layer of the warp-knitted sandwich fabric comprise 100% PET multifilament yarn of a linear mass density of about 30D, the middle connecting layer of the of the warp-knitted sandwich fabric comprises 100% PET multifilament yarn of a linear mass density of about 150D, the warp-knitted sandwich fabric has a thickness of about 1.5 mm, and the warp-knitted sandwich fabric has a rhombic pattern; the 3D nonwoven material comprises 100% PET fiber, has a thickness of about 20 mm, and has a density of about 20 kg/m$^3$; the perforated EVA foam has a hardness of about 45HC, has a thickness of about 13 mm, has a density before perforation of about 50 kg/m$^3$, and has holes of a diameter of about 6±0.6mm and a pitch of about 11±1.5mm; and the warp-knitted mesh fabric comprises 100% PET multifilament yarn comprising a 300D FDY multifilament yarn and a 75D/72F multifilament yarn, has a thickness of about 0.5 mm, and has a hexagonal pattern.

Some composite cushion materials are processed in a mold to impart a three-dimensional shape to the composite cushion material. Some composite cushion materials are processed in a mold to impart a three-dimensional shape to the composite cushion material and cut along an edge of the composite cushion material. Some composite cushion materials are processed by cold pressing, heat pressing, ultrasonic welding, or high frequency welding. Some composite cushion materials are cut with a knife cutting mold or by laser cutting.

In another aspect, the invention provides a method for manufacturing a composite cushion material comprising four layers, the method comprising: (a) providing a first layer, a second layer, a third layer, and a fourth layer, wherein the first layer comprises a warp-knitted sandwich fabric comprising a top surface layer, a bottom surface layer and a middle connecting layer, the second layer comprises a three-dimensional (3D) nonwoven fabric, the third layer comprises a perforated ethylene-vinyl acetate (EVA) foam, and the fourth layer comprises a warp-knitted mesh fabric; (b) assembling the layers such that that the second layer is positioned between the first layer and the third layer, and the third layer is positioned between the second layer and the fourth layer; (c) applying a glue between the first layer and the second layer, between the second layer and the third layer, and between the third layer and the fourth layer, to provide a glued composite material; and (e) pressing the glued composite material to bond the first layer, second layer, third layer, and fourth layer to produce the composite cushion material. In some methods, the glue comprises organosiloxane or chloroprene rubber (CR) polymer.

In yet another aspect, the invention provides a method for manufacturing a composite cushion material comprising four layers, the method comprising: (a) providing a first layer, a second layer, a third layer, and a fourth layer, wherein the first layer comprises a warp-knitted sandwich fabric comprising a top surface layer, a bottom surface layer and a middle connecting layer, the second layer comprises a three-dimensional (3D) nonwoven fabric, the third layer comprises a perforated ethylene-vinyl acetate (EVA) foam, and the fourth layer comprises a warp-knitted mesh fabric; (b) assembling the layers such that that the second layer is positioned between the first layer and the third layer, and the third layer is positioned between the second layer and the fourth layer; (c) sewing together the four layers to produce the composite cushion material In some methods, the four layers are sewn together with 80TEX polyester thread, 100TEX polyester thread, or 210TEX polyester thread.

In some methods, the top surface layer and the bottom surface layer of the warp-knitted sandwich fabric comprise a monofilament yarn, a multifilament yarn, or a staple fiber yarn. For example, the monofilament yarn can comprise polyester, nylon, polypropylene, or polyethylene. For example, the multifilament yarn can comprise polyester, nylon, polypropylene, or polyethylene. For example, the staple fiber yarn can comprise cotton, wool, or viscose.

In some methods, the top surface layer and the bottom surface layer of the warp-knitted sandwich fabric comprise a yarn of a linear mass density of about 30D to about 600D.

In some methods, the multifilament yarn is 100% polyethylene terephthalate (PET) yarn. In some methods, the 100% PET multifilament yarn is of a linear mass density of about 30D.

In some methods, the middle connecting layer of the warp-knitted sandwich fabric comprises a multifilament yarn, a monofilament yarn, or a staple fiber yarn. For example, the multifilament yarn can comprise polyester, nylon, polyethylene, or polypropylene. For example, the monofilament yarn can comprise polyethylene terephthalate (PET), thermoplastic polyether ester elastomer (TPEE), polyamine/ thermoplastic polyurethane (PA/TPU), or polypropylene (PP). For example, the staple fiber yarn can comprise cotton, wool, or viscose.

In some methods, the middle connecting layer of the warp-knitted sandwich fabric comprises a yarn of a linear mass density of about 30D to about 250D.

In some methods, the middle connecting layer of the warp-knitted sandwich fabric comprises a yarn of a diameter of about 0.05 mm to about 0.15 mm. In some methods, the multifilament yarn is 100% polyethylene terephthalate (PET) yarn. In some methods, the 100% polyethylene terephthalate (PET) yarn is of a linear mass density of about 150D.

In some methods, the warp-knitted sandwich fabric has a thickness of about 1 mm to about 5 mm. For example, the thickness of the warp-knitted sandwich fabric can be about 1.5 mm.

In some methods, the warp-knitted sandwich fabric has a pattern selected from the group consisting of plain, rhombic, circular, and comb. For example, the warp-knitted sandwich fabric can have a rhombic pattern.

In some methods, the top surface layer and the bottom surface layer of the warp-knitted sandwich fabric comprise 100% PET multifilament yarn of a linear mass density of about 30D, the middle connecting layer comprises 100% PET multifilament yarn of a linear mass density of about 150D, the warp-knitted sandwich fabric has a thickness of about 1.5 mm, and the warp-knitted fabric has a rhombic pattern.

In some methods, the 3D nonwoven material comprises a fiber selected from the group consisting of polyester, polyethylene (PE), polypropylene (PP), Poly Lactic Acid (PLA), and viscose. In some methods, the 3D nonwoven material comprises polyethylene terephthalate (PET) fiber.

In some methods, the 3D nonwoven material has a thickness of about 2 mm to about 100 mm. For example, the thickness of the 3D nonwoven material can be about 20 mm.

In some methods, the 3D nonwoven material has a density of about 12 kg/m$^3$ to about 30 kg/m$^3$. For example, the density of the 3D nonwoven material can be about 20 kg/m$^3$.

In some methods, the 3D nonwoven material comprises 100% PET fiber, has a thickness of about 20 mm, and has a density of about 20 kg/m$^3$.

In some methods, the perforated EVA foam has a hardness of about 45HC to about 70HC. For example, the hardness of the perforated EVA foam can be about 45HC.

In some methods, the perforated EVA foam has a thickness of about 2 mm to about 20 mm. For example, the thickness of the perforated EVA foam can be about 13 mm.

In some methods, the perforated EVA foam has a density before perforation of about 50 kg/m$^3$to about 200 kg/m$^3$. For example some methods, the density of the perforated EVA foam before perforation can be about 50 kg/m$^3$.

In some methods, the perforated EVA foam comprises holes of a diameter of about 4 mm to about 10 mm. For example, the diameter of the holes in the perforated EVA can be about 6±0.6mm. In some methods, the perforated EVA foam comprises holes of a pitch of about 6 mm to about 15 mm. For example, the pitch of the holes in the perforated EVA foam can be about 11±1.5mm. For example, the diameter of the holes in the perforated EVA foam can be about 6±0.6mm and the pitch of the holes in the perforated EVA foam can be about 11±1.5mm.

In some methods, the perforated EVA foam has a hardness of about 45HC, has a thickness of about 13 mm, has a density before perforation of about 50 kg/m$^3$, and has holes of a diameter of about 6±0.6mm and a pitch of about 11±1.5mm.

In some methods, the warp-knitted mesh fabric comprises a monofilament yarn, a multifilament yarn, or a staple fiber yarn. For example, the monofilament yarn can comprise polyethylene terephthalate (PET), thermoplastic polyether ester elastomer (TPEE), polyamine/ thermoplastic polyurethane (PA/TPU), or polypropylene (PP). For example, the multifilament yarn can comprise polyester, nylon, polypropylene, or polyethylene. For example, the staple fiber yarn can comprise cotton, wool, or viscose.

In some methods, the warp-knitted mesh fabric comprises a yarn of a linear mass density of about 30D to about 300D. In some methods, the warp-knitted mesh fabric comprises a yarn of a diameter of about 0.05 mm to about 0.18 mm.

In some methods, the multifilament yarn is 100% polyethylene terephthalate (PET) yarn. In some methods, the 100% polyethylene terephthalate (PET) yarn comprises a 300D FDY multifilament yarn and a 75D/72F multifilament yarn.

In some methods, the warp-knitted mesh fabric has a thickness of about 0.5 mm to about 2 mm. For example, the thickness of the warp-knitted mesh fabric can be about 0.5 mm.

In some methods, the warp-knitted mesh fabric has a pattern selected from the group consisting of rhombic, circular, hexagonal, and comb. For example, the pattern of the warp-knitted mesh fabric can be hexagonal.

In some methods, the warp-knitted mesh fabric comprises 100% PET multifilament yarn comprising a 300D FDY multifilament yarn and a 75D/72F multifilament yarn, has a thickness of about 0.5 mm, and has a hexagonal pattern.

In some methods, the top surface layer and the bottom surface layer of the warp-knitted sandwich fabric comprise 100% PET multifilament yarn of a linear mass density of about 30D, the middle connecting layer of the of the warp-knitted sandwich fabric comprises 100% PET multifilament yarn of a linear mass density of about 150D, the warp-knitted sandwich fabric has a thickness of about 1.5 mm, and the warp-knitted sandwich fabric has a rhombic pattern; the 3D nonwoven material comprises 100% PET fiber, has a thickness of about 20 mm, and has a density of about 20 kg/m$^3$; the perforated EVA foam has a hardness of about 45HC, has a thickness of about 13 mm, has a density before perforation of about 50 kg/m$^3$, and has holes of a diameter of about 6±0.6mm and a pitch of about 11±1.5mm; and the warp-knitted mesh fabric comprises 100% PET multifilament yarn comprising a 300D FDY multifilament yarn and a 75D/72F multifilament yarn, has a thickness of about 0.5 mm, and has a hexagonal pattern.

Some methods further comprise processing the composite cushion material in a mold to impart a three-dimensional shape to the composite cushion material. Some methods further comprise cutting along an edge of the processed composite cushion material. For example, the processing can be cold pressing, heat pressing, ultrasonic welding, or high frequency welding. For example, the cutting can be with a knife cutting mold. For example, the cutting can be laser cutting.

In another aspect, the invention provides an article of manufacture comprising any of the he composite cushion materials described herein. For example, the article of manufacture can be an item of clothing. For example, the item of clothing can be a kneepad, an elbow pad, or a shoe. For example, the article of manufacture can be an item of furniture. For example, the item of furniture can be a cushion, mattress, pillow, or table mat. For example, the item of clothing can be a safety harness. The safety harness can comprise a padding. The padding can comprise any of the composite cushion materials described herein.

## BRIEF DESCRIPTION OF THE DRAWINGS

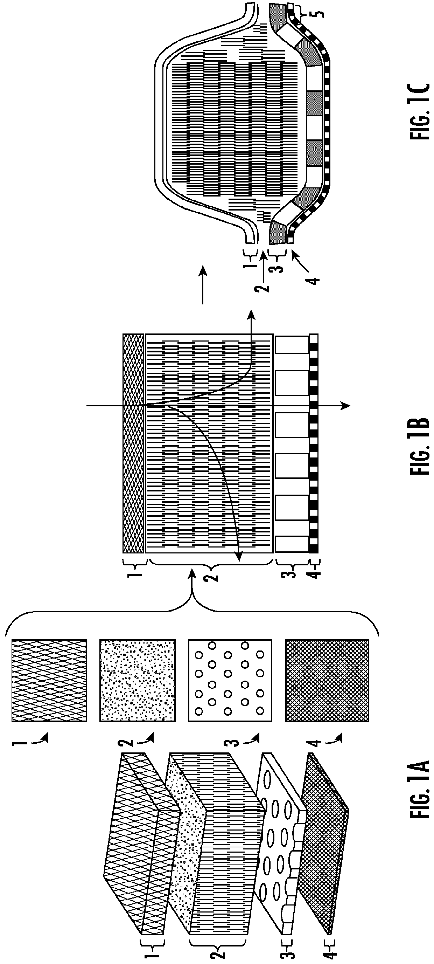

Figure 1A, 1B, and 1C depict structure of an exemplary composite cushion material. 1A (left) depicts a 3-dimensional sketch of the composite cushion material showing the four layers from top to bottom and 1A (right) showing a top-down view of each layer of the composite cushion material. 1B depicts a cross-section view of the composite cushion material with arrrows showing air flow through the material. 1C depicts a cross-section view of composite cushion material after post-processing. Bracket (5) in 1C indicates an indentation from post-processing. First layer (1; warp-knitted rhombic sandwich fabric), second layer (2; 3D nonwoven fabric), third layer (3; perforated EVA foam), and fourth layer (4; warp-knitted mesh fabric) are indicated in each of Figure 1A-1C.

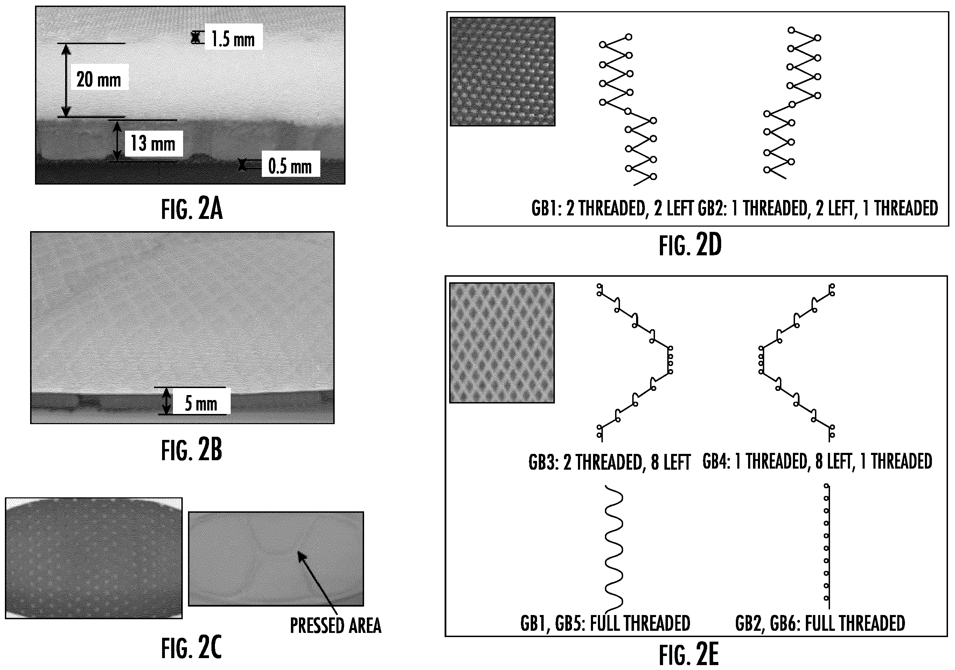

Figures 2A, 2B, 2C, 2D, and 2E depict views of an exemplary composite cushion material. 2A is a cross-section view of the 4-layer composite material. From top to bottom, indicated are First layer (1; warp-knitted rhombic sandwich fabric), second layer (2; 3D nonwoven fabric), third layer (3; perforated EVA foam), and fourth layer (4; warp-knitted mesh fabric). Thicknesses of each layer are indicated. 2B is a cross-section view of the edge after post processing (cold pressing and cutting). Thickness of post-processed composite cushion material is indicated. 2C (top) shows view of the back side (1st layer), and 2C (bottom) shows front side (4th layer) of a composite cushion. Arrow in 2C indicates pressed area. 2D depicts structure of exemplary warp-knitted mesh fabric. Left side of 2D shows view of a first surface (top surface) of a warp-knitted mesh fabric. Right side of 2D is a diagram showing guide bar threading pattern for knitting a warp-knitted mesh fabric: GB1 (guide bar 1), GB2 (guide bar 2). 2E depicts structure of exemplary warp-knitted rhombic sandwich fabric. Left side of 2E shows an exemplary warp-knitted rhombic sandwich fabric. Right side of 2E is a diagram showing guide bar threading pattern for knitting warp-knitted rhombic sandwich fabric: GB1 (guide bar 1), GB2 (guide bar 2), GB3 (guide bar 3), GB4 (guide bar 4), GB5 (guide bar 5), GB6 (guide bar 6).

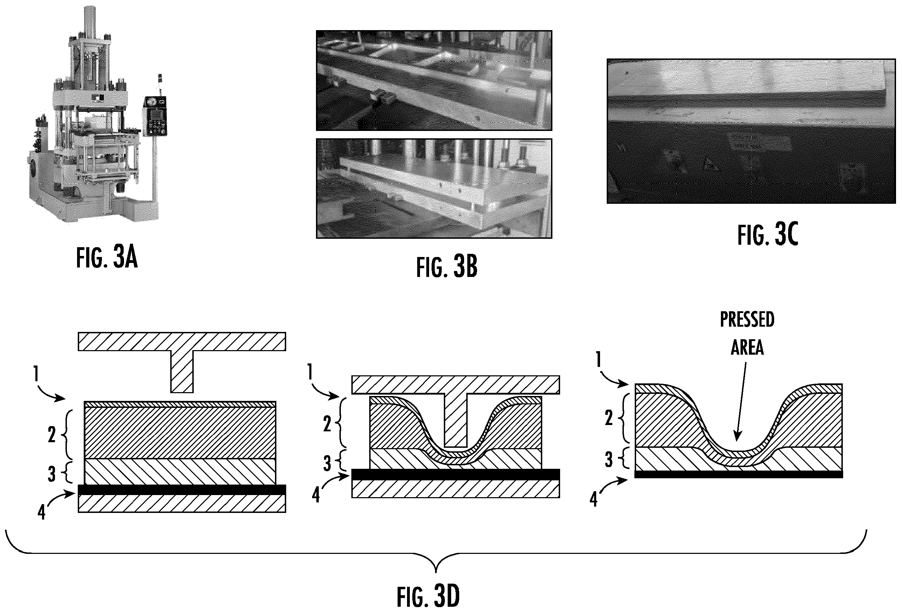

Figures 3A, 3B, 3C, and 3D depict examples of post-processing of a composite cushion material. 3A depicts an example of a vulcanizing machine for heat pressing, 3B depicts an example of a two-piece metal mold (comprising a top piece and a bottom piece) for pressing: (top) (top panel of 3B shows bottom piece of mold when machine is not pressing material), bottom panel of 3B shows top and bottom pieces of mold pressed together when machine is pressing the material), and 3C depicts an example of cutting mold and machine. 3D is schematic of exemplary processing technology, showing the composite cushion material in a metal mold (mold is shown as hatched with wide-spaced right-leaning lines, 1st layer (1) is hatched with narrow-spaced left-leaning lines, 2nd layer (2) is hatched with narrow-spaced right-leaning lines, 3rd layer (3) is hatched with wide-spaced left-leaning lines, and 4th layer (4) is shown as solid black); before pressing (left), during heat pressing (middle) and after heat pressing (right; arrow points to pressed area). First layer (1; warp-knitted sandwich fabric), second layer (2; 3D nonwoven fabric), third layer (3; perforated EVA foam), and fourth layer (4; warp-knitted mesh fabric) are indicated in each of Figure 3D (left, middle, and right panels).

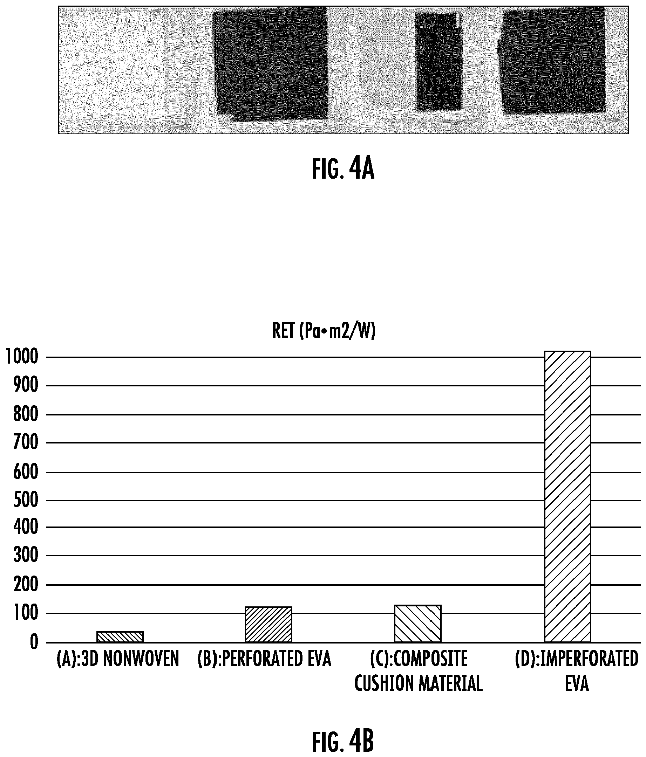

Figures 4A and 4B depict samples and results from ISO 11092 Breathability Tests. 4A shows tested materials, from left to right, (A) 3D nonwoven alone, (B) perforated EVA alone, (C) Composite cushion material, showing top view (first layer shown) on left and bottom view (4th layer shown) on right, (D) imperforated EVA alone. 4B is a graph showing water vapor resistance for (A) 3D nonwoven alone, (B) perforated EVA alone, (C) composite cushion material, (D) imperforate EVA alone.

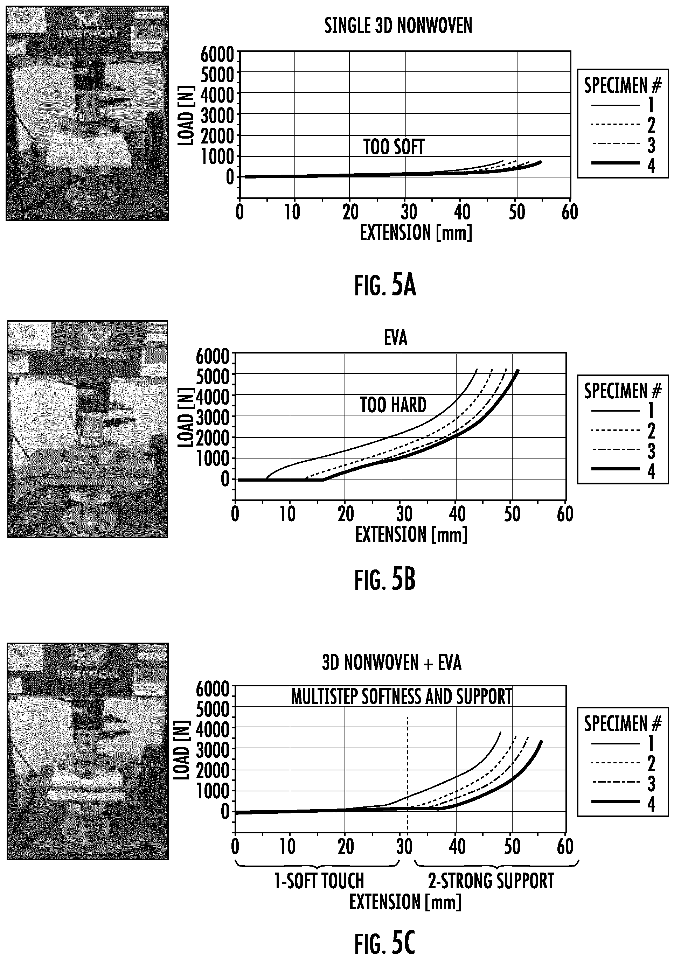

Figures 5A, 5B, and 5C depict testing and results from ISO 3386-1 Compression Stress and Strain Tests. 5A (3D nonwoven material alone), 5B (perforated EVA alone), 5C (3D nonwoven + EVA). Left panels of 5A-5C shows Instron 5967 test equipment and right panels of 5A-5C are graphs of extension vs. load. 4 specimens were tested for each material: 3D nonwoven material alone, perforated EVA alone, and 3D nonwoven + EVA.

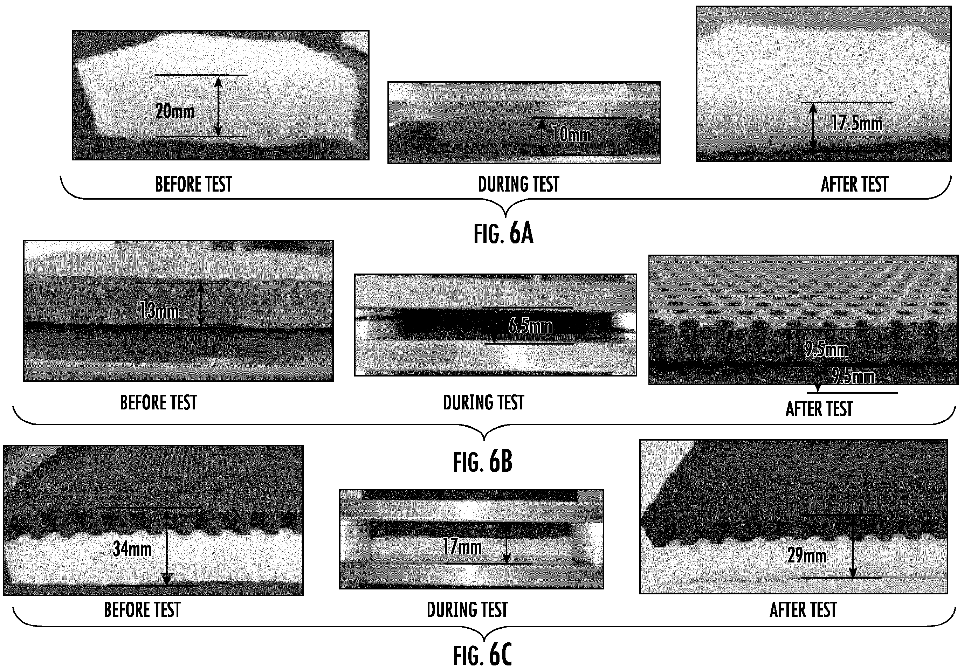

Figures 6A, 6B, and 6C depict testing and results from ISO Compression Set Tests. 6A (3D nonwoven alone), 6B (perforated EVA alone), and 6C (composite cushion material). Left panels of 6A-6C show material before test, middle panels of 6A-6C show material during test, and right panels of 6A-6C show material after test, with measured thicknesses indicated.

## DEFINITIONS

The term "warp knitted" refers to a fabric produced by machine with the yarns running in a lengthwise direction. Warp knitting is the sequential formation and interlinking of loops in an axial direction on a lateral array of needles with at least one separate thread being supplied to each needle. The loops are joined together in a width-wise direction by moving the threads back and forth between adjacent needles. The needles produce parallel rows of loops simultaneously that are interlocked in a zigzag pattern.

The term "wicking" refers to the action of absorbing or drawing off liquid by capillary action. The term "wicking yarn" refers to a yarn that absorbs or draws off liquid by capillary action.

The term "eco-friendly glue" refers to a glue that passes REACH SVHC(substances of very high concern) certification. Exemplary eco-friendly glues include a glue comprising organosiloxane (for example a glue supplied by Anhui East New Materials Co. Ltd, L0877) and a glue comprising chloroprene rubber (CR) polymer (for example, that supplied by Saba Adhesives & Sealants, catalog "Sababond 3802").

The term "polyethylene terephthalate (PET)" refers to a type of polyester.

The term "HC" or "° hardness" refers to the hardness unit in Shore C hardness scale.

The term "denier" abbreviated D, refers to a unit of measure for the linear mass density or fineness of a fiber, filament, or yarn, and is defined as the mass in grams per 9000 meters of the fiber, filament, or yarn.

The term "FDY" refers to a fully drawn yarn.

A multifilament yarn defined as "xD/yF" refers to a yarn of x denier and comprising y filament fiber strands. For example, a multifilament yarn described as 75D/72F is 75 denier and comprises 72 filament fiber strands.

Compositions or methods "comprising" or "including" one or more recited elements may include other elements not specifically recited. When the disclosure refers to a feature comprising specified elements, the disclosure should alternatively be understood as referring to the feature consisting essentially of or consisting of the specified elements.

Designation of a range of values includes all integers within or defining the range, and all subranges defined by integers within the range.

Unless otherwise apparent from the context, the term "about" encompasses insubstantial variations, such as values within a standard margin of error of measurement (e.g., SEM) of a stated value.

Statistical significance means $p \leq 0.05$.

The singular forms of the articles "a," "an," and "the" include plural references unless the context clearly dictates otherwise.

## DETAILED DESCRIPTION

1. General

The invention provides composite cushion material compositions with properties of breathability and multistep softness and support and methods of making the compositions. To provide both breathability and multistep softness and support, the composite cushion material combines 3D nonwoven fabric, perforated EVA foam, and warp-knitted fabrics. The top outer surface of the composite cushion material comprises a warp-knitted sandwich fabric. The interior of the composite cushion material comprises a layer of 3D nonwoven fabric and a layer of perforated EVA foam. The bottom outer surface of the composite cushion material comprises a warp-knitted mesh fabric.

The composite cushion material compositions comprise four layers, a first (top) layer, a second (first middle) layer, a third (second middle) layer, and a fourth (bottom) layer. The first (top) layer comprises a warp-knitted sandwich fabric and is closest to the skin of the wearer. The second (first middle) layer comprises a 3D nonwoven spacer fabric and is positioned between the first layer and the third layer. The third (second middle) layer comprises a perforated EVA foam and is positioned between the second layer and the fourth layer. The fourth (bottom) layer comprises a warp-knitted mesh fabric and is farthest from the skin of the wearer.

The four layers are combined for example by gluing or by sewing to produce the composite cushion material. The composite cushion material may be treated (post-processing) to mold into a three-dimensional shape.

An exemplary composite cushion material is depicted as a 3D sketch on left side of Figure 1A, showing the four layers from top to bottom, and on right side of Figure 1B showing a top-down view of each layer, and in Figure 1B in cross-section view after the layers are combined by gluing, and in Figure 1C showing a cross-section after the composite cushion material is molded into a three-dimensional shape by post-processing steps.

2. Cushion Materials Reported in the Art

Cushion materials reported in the art do not have the same structure, and do not provide the improved breathability and multistep softness and support, as composite cushion materials of the invention.

US20040142619A1 reports a cushion comprising only a three-dimensional spacer fabric having only one level of softness. Every piece of US20040142619A1 cushion material has a spring content, which means there is only one level of softness for each cushion material.

CN211334932U reports a multilayer cushion material comprising an upper knitted mesh layer, a nano silver ion fiber a layer, a sponge layer embedded with elastic hose, a metal fiber layer, and a lower knitted mesh fabric layer, where the layers are sewn together. This high-elastic antibacterial composite knitted mesh cloth is not developed as a cushion material to support heavy weight, but rather for advertising on the walls of tall buildings. The sponge cushion layer embedded with the elastic hose increases elasticity, but the material does not have multistep stress relief properties. A metal fiber layer (non-woven fabric layer) located between the sponge layer and the knitted mesh fabric layer is a flat layer, which does not provide as much support or softness as for example the 3D nonwoven layer of the composite cushion material of the invention. The layers of the CN211334932U multilayer cushion material are sewn together, which is more cost- and time-consuming than using adhesive glue in the composite cushion material of the invention.

US20200360210A1 reports a multi-layer support system comprising two 3D spacer fabric layers, a non-viscoelastic layer, and layers comprising foam. US20200360210A1's non-viscoelastic pressure relieving layer (50 grams per square inch to about 200 grams per square inch (corresponds to 77500 gsm (grams per square meter) to about 310000 gsm) in weight and compressed thickness of about 0.5 inches to about 1.5 inches (corresponds to about 1.27cm to about3.81 cm) is much heavier and thicker than the first pressure-relieving layer (3D nonwoven fabric; weight about 40gsm to about 2000gsm, thickness about 2mm to about 100mm) or the second pressure-relieving layer (perforated EVA foam; weight about 100gsm to about 1000gsm, thickness about 2mm to 20mm) of the composite cushion materials of the invention. The base layers of US20200360210A1's multi-layer support system are made of a polyurethane foam which is unbreathable, in contrast to the composite cushion material of the invention where each layer is breathable. The composite cushion material of the invention is much lighter and more breathable than the cushion material in US20200360210A1.

WO2012071581A2 reports a composite cushion material comprising a single resilient cushion material between synthetic nonwoven fabric layers. WO2012071581A2's composite cushion material includes only one layer of cushion material, and the synthetic non-woven fabric sandwiching the cushion material is too thin to have cushioning properties. The composite cushion material of the invention, which comprises both a 3D nonwoven layer and a perforated EVA foam layer, provides improved support for a wearer over the composite cushion material of WO2012071581A2.

CN1799870A reports a multi-layer cushion comprising a top layer of woven fabric, nonwoven fabric, or knitted fabric, a buffer layer (cushion layer) of foam, and a back nonwoven layer. CN1799870A's cushion layer is made of a polyurethane foam, which is unbreathable, and its back non-woven fabric layer has no cushioning properties. The composite cushion material of the invention is much more breathable than the cushion material in CN1799870A and will provide better support when used in wearable equipment.

**3.** Properties and Benefits of Composite Cushion Material of the Invention

Composite cushion material compositions of the invention provide improvements over traditional cushion materials in properties of breathability and multilevel softness and support. To provide both breathability, multistep softness and support, 3D nonwoven fabric is combined with perforated EVA foam and warp-knitted fabrics in the composite cushion material. Composite cushion material compositions of the invention provide excellent breathability. Knitted sandwich fabric of the first layer can wick moisture (e.g., liquid sweat) away from wearer. Moisture is absorbed by the first layer fabric (warp-knitted sandwich fabric) next to skin, and wicks away through fibers of the first layer fabric that connect together. As moisture wicks through the first layer (warp-knitted sandwich fabric), moisture will also evaporate from first layer fibers (warp-knitted sandwich fabric) to the outside. Moisture (e.g., liquid sweat) also evaporates from skin, transforming to water vapor, and gets through the four layers of the composite cushion material as shown by arrows in Figure 1B. The first layer has densely distributed holes to permeate air. 3D nonwoven spacer fabric of the second layer is made of short fibers. The fibers are vertically laid and entangled together. The shape of the fibers in the 3D nonwoven spacer fabric may not be perfectly "vertical", that is, the actual shape may be curled but not straight.. The fibers of the3D nonwoven spacer fabric are incompactly entangled together. The air channel of the 3D nonwoven spacer fabric is extended in all directions. Air can pass beside every single fiber of the 3D nonwoven spacer fabric, and there are countless through-holes created among incompactly entangled fibers on all directions of the fabric of the second layer. Liquid moisture can wick through fibers of the 2nd layer. The third layer of perforated EVA is breathable through punched holes. The warp-knitted mesh fabric of the fourth layer is also breathable with the knitted porous structure. Fibers in each of the 1st, 2nd, and 4th layers can also catch and condense moisture vapor into liquid, wick that liquid moisture, and then evaporate it, which further provides moisture management in the composite cushion material..

Composite cushion material compositions of the invention provide multistep softness and support. The warp-knitted sandwich fabric of the first layer provides soft touch, in that the fabric is soft to the touch. 3D nonwoven spacer fabric of the second layer is thick and soft. The 3D nonwoven spacer fabric fits a body (for example a human body) well and makes as much contact as possible to distribute pressure. The hardness of the perforated EVA of the third layer is greater than the hardness of the 3D nonwoven fabric of the second layer. The perforated EVA of the second layer provides reliable support, in that the EVA foam can distribute pressure and support heavy weight, such as the weight of a human body, with small deformation. For example, specific stress-strain data for a combination of 3D nonwoven fabric and perforated EVA is shown in Figure 5C, right-hand panel and described in Example 9, Table 12. When there is a load from outside, the hard EVA transforms just a little, distributing the force and reducing the average pressure transferred to inner layer by the entire stiff EVA area. When there is a load from outside, (for example, in the case that an individual wears the new composite cushion material on a shoulder and carries a heavy weight on the shoulder, the weight loads on the surface of the 4th layer. Because the 4th layer is a single-layer thin fabric, it can be neglected when distributing the pressure. Therefore, this situation equals the outer side of the 3rd layer EVA foam facing the load directly. For example, this is shown in Figure 5B. For example, when there is a 500N load, a perforated EVA foam alone will be compressed by about 8% to 20% of thickness, while a 3D nonwoven fabric alone will be compressed by about 75% to 85% of thickness. The transformation of the perforated EVA foam is small, much smaller compared to that of the 3D nonwoven fabric.

Composite cushion material compositions of the invention provide good resilience, in that the composite material has multistep softness and support under compression, and can recover to almost original thickness as shown in Figure 5C and Figure 6C. Composite cushion material compositions of the invention provide durability, in that the composite material can recover to almost original thickness after long time of heavy load, and still provide support.

The warp-knitted mesh fabric of the fourth layer resists abrasion from outside and protects the composite cushion material. Composite cushion material compositions of the invention are light weight. Manufacturing cost of composite cushion materials of the invention is low because each layer is easy to fabricate on a normal commercially available textile machines (for example, textile machines including single-bed warp-knitting machines, double-bed warp knitting machines, nonwoven vertical lap-forming and pendulum-type folding machines, and non-woven heat setting machines) and because each layer can be fabricated by mature techniques (for example, techniques for making warp-knitted fabrics, techniques for making 3D nonwoven fabrics and techniques for combining them together as exemplified for example in Examples 2-3, 5, and 6-7).

4. Structure and Manufacturing of Composite Cushion Material

An exemplary composite cushion material is depicted as a 3D sketch in Figure 1A (left), showing the four layers from top to bottom and in Figure 1A (right) showing a top-down view of each layer.

The layers are combined for example by gluing or by sewing. Figure 1C depicts an exemplary combined material after gluing, in cross-section view. Glue, for example an eco-friendly glue, can be attached between each layer and cold-pressed to press the entire materials to bond.

The composite cushion material is molded into a three-dimensional shape by post processing methods. Figure 1C shows a cross-section of an exemplary composite cushion material after molding into a three-dimensional shape by post-processing steps. With a specially designed mold, a desired shape or pattern of cushion can be formed by cold pressing, heat pressing, ultrasonic welding, or high frequency welding. The composite cushion material molded into a desired pattern or shape can be cut along the edge, for example with a knife cutting mold or by laser cutting.

Figure 2 shows images of an exemplary composite cushion material. The specifications of each layer are as in Table 1, Example 1, with EVA foam perforated as in Example 4, and the composite cushion material post-processed as in Example 6. Figure 2A shows a cross-section view of the composite cushion material. Figure 2B shows a cross-section view of the edge after post processing (cold pressing and cutting). Figure 2C (top) shows view of the back side (1st layer showing), and 2C (bottom) shows front side (4th layer showing) of a composite cushion. Figure 2D (left side) shows a view of the first surface (top surface) of a warp-knitted mesh fabric used as a 4th layer in the exemplary composite cushion material. Figure 2D (right side) shows guide bar threading pattern for knitting a warp-knitted mesh fabric. Figure 2E (left side) shows an exemplary warp-knitted rhombic sandwich fabric used as a 1st layer in the exemplary composite cushion material. Figure 2E (right side) shows guide bar threading pattern for knitting warp-knitted rhombic sandwich fabric.

**5. Materials used for four layers of composite cushion material**

a. Warp-knitted sandwich fabric:

Warp-knitted sandwich fabrics are a class of knitted fabric having two face layers and a middle filler layer which connects the top and bottom face layers by spacer yarns that run between the top and bottom face layers.

A yarn used in a top or bottom surface (top and bottom face layer) can be a monofilament yarn, a multifilament yarn or a staple fiber yarn. Exemplary monofilament yarns comprise polyester, nylon, polypropylene, or polyethylene. Exemplary multifilament yarns comprise polyester, nylon, polypropylene, or polyethylene. Exemplary staple yarns comprise cotton, wool, or viscose. In some embodiments, the multifilament yarn comprises polyethylene terephthalate (PET). A yarn used in a top or bottom surface (top and bottom face layer) can have a linear mass density of about 30D to about 600D). Linear mass density of a yarn used in a top or bottom surface of the warp-knitted sandwich fabric can be about 30D, about 50D, about 75D, about 100D, about 150D, about 200D, about 300D, about 400D, about 500D, or about 600D. For example, a yarn used in a top and bottom surfaces layers of a warp-knitted sandwich fabric can be a100% polyethylene terephthalate (PET) multifilament yarn of linear mass density of about 30D.

A yarn used in a middle filler layer (middle connecting layer) of a warp-knitted sandwich fabric can be a multifilament yarn, e.g., polyester (for example polyethylene terephthalate (PET)), nylon, polypropylene, or polyethylene, or a staple yarn, e.g., cotton, wool, or viscose, or a bouncy monofilament yarn, e.g., polyethylene terephthalate (PET), thermoplastic polyether ester elastomer (TPEE), polyamine/ thermoplastic polyurethane (PA/TPU), polyethylene (PE), or polypropylene (PP). In some embodiments, the multifilament yarn comprises polyethylene terephthalate (PET).

A yarn used in a middle filler (middle connecting layer) can have a diameter of about 0.05 mm to about 0.15mm. For example, a yarn used in a middle filler (middle connecting layer) can have a diameter of about 0.05 mm, about 0.06 mm, about 0.07 mm, about 0.08 mm, about 0.09 mm, about 0.1 mm, about 0.11 mm, about 0.12 mm, about 0.13 mm, about 0.14 mm, or about 0.15 mm. For example, a yarn used in a middle filler (middle connecting layer) can be a monofilament yarn of diameter of about 0.05 mm, about 0.06 mm, about 0.07 mm, about 0.08 mm, about 0.09 mm, about 0.1 mm, about 0.11 mm, about 0.12 mm, about 0.13 mm, about 0.14 mm, or about 0.15 mm.

A yarn used in a middle filler (middle connecting layer) can have a linear mass density of about 30D to about 250D. For example, a yarn used in a middle filler (middle connecting layer) can have a linear mass density of about 30D, about 50D, about 75D, about 100D, about 150D, about 200D, or about 250D. For example, a yarn used in a middle filler (middle connecting layer) can be a multifilament yarn or staple fiber yarn of linear mass density of about 30D, about 50D, about 75D, about 100D, about 150D, about 200D, or about 250D.

For example, a yarn used in a middle filler layer (middle connecting layer) of a warp-knitted sandwich fabric can be a 100% polyethylene terephthalate multifilament yarn of about 0.1 mm diameter (150D).

Warp knitted fabrics can be knitted for example on a double-bed warp knitting machine, e.g., a Karl Mayer (China) Ltd., Model No. HD6 /20-35. A double-bed warp-knitting machine has at least 3 bars to lead yarn systems. At least 1 bar is used for each layer, i.e., top surface layer, bottom surface layer and middle connecting layer.

Knitting pattern of the warp-knitted sandwich fabric can be, e.g., plain, rhombic, circular, or comb. A "plain" pattern refers to the basic pattern of warp knitting, where parallel yarns zigzag lengthwise along the fabric, each loop securing a loop of an adjacent strand from the previous row.

Thickness of the warp-knitted sandwich fabric can be from about 1 mm to about 5 mm. Thickness is adjustable from about 1 mm to about 5 mm by double-bed warp knitting machine settings. Thickness of the warp-knitted sandwich fabric can be about 1 mm, about 1.5 mm, about 2 mm, about 2.5 mm, about 3 mm, about 3.5 mm, about 4 mm, about 4.5 mm, or about 5 mm. For example, the thickness of the warp-knitted sandwich fabric can be about 1.5 mm. For example, the thickness of the warp-knitted sandwich fabric can be 1.5 mm.

An exemplary warp-knitted sandwich fabric comprises 100% polyethylene terephthalate (PET) multifilament yarn of linear mass density of about 30D (top and bottom surface layers),100% polyethylene terephthalate (PET) multifilament yarn of linear mass density of about 150D (middle connecting layer), has rhombic pattern, and is 1.5 mm thick. An exemplary warp-knitted sandwich fabric is supplied by Shanghai Huaju Textile Co., Ltd., Catalog No. HJ210408.

b. 3D nonwoven spacer fabric

A 3D nonwoven fabric is a class of nonwoven fabric having vertical fiber net structure, different from the parallel fiber net structure of traditional nonwoven materials. A fiber used in a 3D nonwoven fabric can be, for example, a polyester, (for example polyethylene terephthalate (PET)), polyethylene (PE), polypropylene (PP), Poly Lactic Acid (PLA), or viscose. 3D nonwoven fabrics can comprise a low-melting point fiber and other fibers. A low-melting point fiber is a polymer fiber whose melting-point equals or is lower than 110C°, for example, a core-shell structure PET short fiber with a 110C° melting point. Other fibers in a 3D nonwoven fabric have a higher melting point than the low-melting point fiber, at least higher than 110C°. In some embodiments, the material type of the low-melting point and high-melting point fibers are the same, e.g., low-melting point (110C°) PET fiber mixed with high-melting point PET (220C°) fiber. In other embodiments, the material type of the low-melting point and of the high-melting point fibers are different, e.g., low-melting point (110C°) PET fiber mixed with high-melting point (160C°) PP fiber. For example, a 3D nonwoven fabric can comprise 100% PET fiber.

A 3D nonwoven fabric can be produced by mixing a low melting point fiber and other fibers; opening, scotching, feeding fiber, carding and delivering to a vertical lap forming machine to process vertical forming. With a pendulum-type folding machine swinging back and forth, the fiber net is continuously folded and descended in a forming curtain, becoming vertically arranged continuous fiber net layers in a steer passage. Finally, after heat setting and cooling setting, the three-dimensional nonwoven spacer is made. A conventional non-woven heat setting machine is used. A 3D nonwoven fabric can be fabricated using vertical lap-forming and pendulum-type folding machine, for example a Qingdao Chenwei Machinery Co., Catalog No. LF3000KW, and a (conventional) non-woven heat setting machine for example a Qingdao Chenwei Machinery Co., Ltd, Catalog No. HS2000mm.

Thickness of the 3D nonwoven fabric is adjustable from about 2 mm to about 100 mm. Thickness of the 3D nonwoven fabric can be about 2 mm to about 100 mm. Thickness can be about 2 mm, about 3 mm, about 4 mm, about 5 mm, about 6 mm, about 7 mm, about 8 mm, about 9 mm, about 10 mm, about 11 mm, about 12 mm, about 13 mm, about 14 mm, about 15 mm, about 16 mm, about 17 mm, about 18 mm, about 19 mm, about 20 mm, about 21 mm, about 22 mm, about 23 mm, about 24 mm, about 25 mm, about 26 mm, about 27 mm, about 28 mm, about 29 mm, about 30 mm, about 31 mm, about 32 mm, about 33 mm, about 34 mm, about 35 mm, about 36 mm, about 37 mm, about 38 mm, about 39 mm, about 40 mm, about 41 mm, about 42 mm, about 43 mm, about 44 mm, about 45 mm, about 46 mm, about 47 mm, about 48 mm, about 49 mm, about 50 mm, about 51 mm, about 52 mm, about 53 mm, about 54 mm, about 55 mm, about 56 mm, about 57 mm, about 58 mm, about 59 mm, about 60 mm, about 61 mm, about 62 mm, about 63 mm, about 64 mm, about 65 mm, about 66 mm, about 67 mm, about 68 mm, about 69 mm, about 70 mm, about 71 mm, about 72 mm, about 73 mm, about 74 mm, about 75 mm, about 76 mm, about 77 mm, about 78 mm, about 79 mm, about 80 mm, about 81 mm, about 82 mm, about 83 mm, about 84 mm, about 85 mm, about 86 mm, about 87 mm, about 88 mm, about 89 mm, about 90 mm, about 91 mm, about 92 mm, about 93 mm, about 94 mm, about 95 mm, about 96 mm, about 97 mm, about 98 mm, about 99 mm, or about 100 mm. For example, the thickness of the 3D nonwoven fabric can be about 20 mm. For example, the thickness of the 3D nonwoven fabric can be 20 mm.

Density of the 3D nonwoven fabric is adjustable from about 12 kg/m$^3$ to about 30 kg/m$^3$. Density of the 3D nonwoven fabric is about 12 kg/m$^3$ to about 30 kg/m$^3$. Density can be about 12 kg/m$^3$, about 13 kg/m$^3$, about 14 kg/m3, about 15 kg/m$^3$, about 16 kg/m$^3$, about 17 kg/m$^3$, about 18 kg/m$^3$, about 19 kg/m$^3$, about 20 kg/m$^3$, about 21 kg/m$^3$, about 22 kg/m$^3$, about 23 kg/m$^3$, about 24 kg/m$^3$, about 25 kg/m$^3$, about 26 kg/m$^3$, about 27 kg/m$^3$, about 28 kg/m$^3$, about 29 kg/m$^3$, or about 30 kg/m$^3$. For example, the density of the 3D nonwoven spacer fabric can be about 20kg/m$^3$. For example, the density of the 3D nonwoven spacer fabric can be 20kg/m$^3$.

Weight of a 3D nonwoven fabric depends on its density and its thickness.

$$\text{Density (in kg/m}^3\text{)} \times \text{Thickness (in mm)} = \text{Weight (in grams per square meter (gsm))}$$

For a 3D nonwoven fabric of density 20kg/m$^3$ and of thickness of about 2 mm to about 100 mm, the weight of the 3D nonwoven fabric can be about 40 gsm to about 2000 gsm. Exemplary weights of a 3D nonwoven fabric of density 20kg/m$^3$ are 40 gsm, about 60 gsm, about 80 gsm, about 100 gsm, about 120 gsm, about 140 gsm, about 160 gsm, about 180 gsm, about 200 gsm, about 300 gsm, about 400 gsm, about 500 gsm, about 600 gsm, about 700 gsm, about 800 gsm, about 900 gsm, about 1000 gsm, about 1100 gsm, about 1200 gsm, about 1300 gsm, about 1400 gsm, about 1500 gsm, about 1600 gsm, about 1700 gsm, about 1800 gsm, about 1900 gsm, about or about 2000 gsm. For example the weight of the 3D nonwoven fabric having density of about 20kg/m$^3$ and thickness of about 20 mm can be about 400 gsm.

An exemplary 3D nonwoven fabric comprises 100% PET fiber, has a thickness of about 20 mM, has a density of about 20kg/m$^3$, and has a weight of about 400 gsm. An exemplary 3D nonwoven fabric is supplied by DEESTAR Fiber Technology Co., Ltd., Catalog No. DS3DNWE3020.

c. Perforated EVA foam

Ethylene-vinyl acetate (EVA) can be foamed and cut to sheet with a desired thickness. Thickness of EVA foam is adjustable from about 2 mm to about 20mm. Thickness can be about 2 mm, about 3 mm, about 4 mm, about 5 mm, about 6 mm, about 7 mm, about 8 mm, about 9 mm, about 10 mm, about 11 mm, about 12 mm, about 13 mm, about 14 mm, about 15 mm, about 16 mm, about 17 mm, about 18 mm, about 19 mm, or about 20 mm. An exemplary EVA foam has thickness of about 13 mm. An exemplary EVA foam has thickness of 13 mm.

Hardness of the EVA foam is adjustable from about 45HC to about 70 HC. Hardness of the EVA foam is about 45HC to about 70 HC. Hardness can be about 45HC, about 50 HC, about 55 HC, about 60 HC, about 65 HC, or about 70 HC. An exemplary EVA foam has about 45° (45HC) hardness, In some embodiments, the EVA foam has about 70HC hardness.

Density of the EVA foam before perforation can be about 50 kg/m$^3$ to about 200 kg/m$^3$. Density of the EVA foam before perforation can be about 50 kg/m$^3$, about 60 kg/m$^3$, about 70 kg/m$^3$, about 80 kg/m$^3$, about 90 kg/m$^3$, about 100 kg/m$^3$, about 110 kg/m$^3$, about 120 kg/m$^3$, about 130 kg/m$^3$, about 140 kg/m$^3$, about 150 kg/m$^3$, about 160 kg/m$^3$, about 170 kg/m$^3$, about 180 kg/m$^3$, about 190 kg/m$^3$, or about 200 kg/m$^3$. For example the density of the EVA foam before perforation can be about 50 kg/m$^3$. For example the density of the EVA foam before perforation can be 50 kg/m$^3$. In some embodiments, the EVA foam has density before perforation of about 50 kg/m3 (45HC). In some embodiments, the EVA foam has density before perforation of about 200 kg/m3 (70HC).

Weight of an EVA foam depends on its density and its thickness.

$$\text{Density (in kg/m}^3\text{)} \times \text{Thickness (in mm)} = \text{Weight (in grams per square meter (gsm))}$$

For an EVA foam of density about 50 kg/m$^3$ and of thickness of about 2 mm to about 20 mm, the weight of the EVA foam can be about 100 gsm to about 1000 gsm. Exemplary weights of an EVA foam of density 50 kg/m$^3$ are about 100 gsm, about 150 gsm, about 200 gsm, about 250 gsm, about 300 gsm, about 350 gsm, about 400 gsm, about 450 gsm, about 500 gsm, about 550 gsm, about 600. about 650 gsm, about 700 gsm, about 750 gsm, about 800 gsm, about 850 gsm, about 900 gsm, about 950 gsm, and about 1000 gsm. For example, the weight of the EVA foam having density about 50kg/m$^3$ and thickness about 13 mm can be about 650 gsm.

For an EVA foam of about density 200 kg/m$^3$ and of thickness of about 2 mm to about 20 mm, the weight of the EVA foam can be about 400 gsm to about 4000 gsm. Exemplary weights of an EVA foam of density 200 kg/m$^3$ are about 400 gsm, about 600 gsm, about 800 gsm, about 1000 gsm, about 1200 gsm, about 1400 gsm, about 1600 gsm, about 1800 gsm, about 2000 gsm, about 2200 gsm, about 2400 gsm, about 2600 gsm, about 2800 gsm, about 3000 gsm, about 3200 gsm, about 3400 gsm, about 3600 gsm, about 3800, or about 4000 gsm.

An exemplary EVA foam has 45° (45HC) hardness, thickness of about 13 mm, density before perforation of about 50kg/m$^3$, and weight before perforation of about 650 gsm. An exemplary EVA foam is supplied by Shanghai Moyuan Industrial Co., Ltd., Catalog No. MYEVA45HC.

A specially designed perforating mold can be used to puncture regular holes on an EVA foam sheet. An exemplary perforating mold can have two lines of punching needles. One punch creates two rows of holes in the EVA foam sheet. The machine feeds the EVA foam by the designed distance after each punch for the next punch. An exemplary perforating machine is supplied by Dongguan Lianhong Machinery Co., Ltd, Catalog No. LH-1600, and an exemplary specially designed perforating mold is supplied by Dongguan Hongtai hardware Co., Ltd.

In some embodiments, the hole diameters can be from about 4 mm to about 10 mm. In some embodiments, the hole pitch can be from about 6 mm to about 15 mm. An exemplary perforated EVA foam has hole diameter of 6±0.6mm, and pitch of holes of 11±1.5mm.

d. Warp-knitted mesh fabric

A warp-knitted mesh fabric is a fabric with mesh-shaped holes. The holes are made by the motions of yarn guide bars during warp knitting. A yarn used in a warp-knitted mesh fabric can be a multifilament yarn, a monofilament yarn, or a staple fiber yarn. Exemplary multifilament yarns comprise polyester (for example PET), nylon, polypropylene, or polyethylene. Exemplary monofilament yarns comprise polyethylene terephthalate (PET), thermoplastic polyether ester elastomer (TPEE), polyamine/ thermoplastic polyurethane (PA/TPU), or polypropylene (PP). Exemplary staple yarns comprise cotton, wool, or viscose. In some embodiments, the multifilament yarn comprises polyethylene terephthalate (PET).

A yarn used in a warp-knitted mesh fabric can have a diameter of about 0.05 mm to about 0.18 mm. For example, a yarn used in a warp-knitted mesh fabric can have a diameter of about 0.05 mm, about 0.06 mm, about 0.07 mm, about 0.08 mm, about 0.09 mm, about 0.1 mm, about 0.11 mm, about 0.12 mm, about 0.13 mm, about 0.14 mm, about 0.15 mm, about 0.16 mm, about 0.17 mm, or about 0.18 mm. For example, a yarn used in a warp-knitted mesh fabric can be a monofilament yarn of diameter of about 0.05 mm, about 0.06 mm, about 0.07 mm, about 0.08 mm, about 0.09 mm, about 0.1 mm, about 0.11 mm, about 0.12 mm, about 0.13 mm, about 0.14 mm, about 0.15 mm, about 0.16 mm, about 0.17 mm, or about 0.18 mm.

A yarn used in a warp-knitted mesh fabric can have a linear mass density of about 30D to about 300D. For example, a yarn used in a warp-knitted mesh fabric can have a linear mass density of about 30D, about 50D, about 75D, about 100D, about 150D, about 200D, about 250D, or about 300D. For example, a yarn used in a warp-knitted mesh fabric can be a multifilament or staple fiber yarn of a linear mass density of about 30D, about 50D, about 75D, about 100D, about 150D, about 200D, about 250D, or about 300D.

For example, a warp-knitted mesh fabric can comprise 100% PET multifilament yarn comprising a 300D FDY multifilament yarn and a 75D/72F multifilament yarn.

Warp knitted mesh fabrics can be knitted for example on a single bed warp knitting machine, for example a Karl Mayer (China) Ltd HKS 3-M. A single-bed warp knitting machine has at least 2 bars to lead yarn systems. Knitting pattern of the warp-knitted mesh fabric can be, e.g., rhombic, circular, or hexagonal, or comb.

Thickness of the warp-knitted mesh fabric can be from about 0.5 mm to about 2 mm, depending on the fineness of the yarn. Thickness is adjustable from about 0.5 mm to about 2 mm, depending on the fineness of the yarn. Thickness of the warp-knitted mesh fabric can be about 0.5 mm, about 0.6.mm, about 0.7 mm, about 0.8 mm, about 0.9 mm, about 1 mm, about 1.1 mm, about 1.2 mm, about 1.3 mm, about 1.4 mm, about 1.5 mm, about 1.6 mm, about 1.7 mm, about 1.8 mm, about 1.9 mm, or about 2 mm. For example, the thickness of the warp-knitted mesh fabric can be about 0.5 mm. For example, the thickness of the warp-knitted sandwich fabric can be 0.5 mm.

An exemplary warp-knitted mesh fabric comprises 100% PET multifilament yarn comprising a 300D FDY multifilament yarn and a 75D/72F multifilament yarn, is hexagonal pattern, and is 0.5±0.05mm thick. An exemplary warp-knitted mesh fabric is supplied by Fujian Jinjiang Huayu Weaving Co., Catalog No. HN082501.

An exemplary warp-knitted mesh fabric has a first surface (top surface) which is smoother to touch and a second surface (bottom surface) which is rougher to touch. The first surface (top surface) has loop pillars on the surface of the fabric. The first surface (top surface) is smoother when touched along the warp direction because the loop pillars on the surface are arranged along the warp direction continuously. The second surface (bottom surface) has discontinuous underlap on its surface, and is rougher to touch. In some embodiments of the invention, the first surface of the warp-knitted mesh fabric faces away from the skin of the wearer and the second surface of the warp-knitted mesh fabric faces the perforated EVA foam third layer.

e. Yarns

Some composite cushion materials comprise a yarn of a linear mass density of about 30D to about 600D. Some composite cushion materials comprise a yarn of a linear mass density of about 30D to about 250D. Some composite cushion materials comprise a yarn of a linear mass density of about 30D to about 300D. Some composite cushion materials comprise a yarn of a diameter of about 0.05 mm to about 0.15 mm. Some composite cushion materials comprise a yarn of a diameter of about 0.05 mm to about 0.18 mm.

7. Methods of Combining the Four Layers into a Composite Cushion Material

The four layers can be combined for example by gluing or sewing. For example, an eco-friendly glue can be attached between the first and second layers, between the second and third layers, and between the third and fourth layers and the entire combined material pressed to bond the layers. Exemplary eco-friendly glues include a glue comprising organosiloxane (for example a glue supplied by Anhui East New Materials Co. Ltd, Catalog # L0877) and a glue comprising chloroprene rubber (CR) polymer (for example, that supplied by Saba Adhesives & Sealants, catalog # "Sababond 3802").
An exemplary cold-bonding machine is supplied by Yancheng Xiehe Machinery Co., Ltd., Catalog No. SH-2010AB. Figure 1B is a schematic showing a composite cushion material after gluing and bonding.
The four layers can also be adhered to each other for example by sewing. Exemplary thread for sewing is 80TEX polyester thread, 100TEX polyester thread, or 210TEX polyester thread. Exemplary equipment for sewing layers is a Brother computerized sewing machine or a Mitsubishi automatic industrial sewing machine.

**8.** Post processing methods

The composite cushion may be treated by post-processing methods to impart a three-dimensional shape. A specially designed mold, for example a metal mold, can be used, for example, with cold-pressing, heat pressing, ultrasonic welding, or high frequency welding to impart a three-dimensional shape to the composite cushion material. Figure 1C is a schematic showing a composite cushion material after post-processing. Heat pressing can use for example a vulcanizing machine. A thin edge of the composite cushion material after post-processing pressing (see for example indentation (5) in Figure 1C, referred to as a pressed edge), can make it easier to sew the post-processed composite cushion material into an article of clothing or an article of manufacture than an unpressed edge. After the three-dimensional shape is imparted, the post-processing can further comprise cutting along the edge with a knife cutting mold or by laser cutting.
Exemplary equipment for post-processing is shown in Table 3 in Example 7 and in Figures 3A-C. Exemplary post-processing conditions are shown in Table 4, in Example 7, and in Figure 3D. A metal mold is depicted in Figure 3D (left and middle panels) as .

9. Testing Properties of the composite cushion material

Composite cushion materials may be tested for breathability by standard tests, for example by an ISO 11092 test (Example 8), for compression stress and strain by standard tests, for example by an ISO 3386-1 test (Example 9), and for compression set by standard tests, for example by an ISO 1856 test (Example 10).

10. Uses of composite cushion material of the invention

The composite cushion material of the present invention is designed for breathability and moisture management, and to absorb and wick body fluids such as sweat, urine, blood, and mucus and is designed to provide multistep softness and support for the user. An article of manufacture, including an article of clothing comprising the composite cushion material is permeable to body fluids and comfortable for the user.
The composite cushion material of the invention can be used in industrial, medical, and consumer products for breathability, moisture management, softness, multistep support, and compression. The composite cushion material of the invention is useful in products for individuals who work for extended periods in hot sun, under conditions of high solar radiation and/or high temperature. The composite cushion material of the invention with its ability to form a desired 3D shape and moisture management properties provides breathability, moisture management, softness, multistep support, and compression in products for individuals in high solar radiation and/or high temperature environment.
Compositions of the invention useful in providing breathability, moisture management, softness, multistep support, and compression to individuals in high solar radiation and/or high temperature environments. In an example, the individual is a utility worker, construction worker, or general industrial worker. The composite cushion material of the invention may be used in personal protective equipment for industry. The composite cushion material of the invention may be used in protective article of clothing, for example a safety harness, a fall protection harness, a seat, a safety helmet or hat, or a safety shoe.

An exemplary use is in a utility harness, for example a Honeywell Miller H700 Utility Harness (Honeywell Industrial Safety, Fort Mill, SC, USA). Some safety harnesses comprise a composite cushion material of the invention as a breathable and supportive padding. A wearable padding in a safety harness may comprise a composite cushion material of the invention .A safety helmet or hat may comprise the composite cushion material in a helmet or hat cushion. A safety shoe may comprise the composite cushion material of the invention in a safety shoe insole. Other exemplary uses are in consumer products (e.g., clothing, hats, vests, shoes) to provide breathability, moisture management, softness, multistep support, and compression to individuals, for example to individuals in high solar radiation environments and/or high temperature environments. Exemplary uses are in consumer products such as an elbow pad, kneepad, or sole of a shoe, or a hat. Exemplary uses are in sporting equipment, for example, in a kneepad, an elbow pad, a sports shoe, or a sole of sports shoe. Other exemplary uses are in furniture products, for example, a seat cushion, a back cushion, a mattress, or a pillow, or as a layer in furniture.

## EXAMPLES

**Example 1:** Materials used in preparation of a composite cushion material

Materials used in preparation of a composite cushion material as pictured in Figure 2A-C and as tested as in Examples 8 and 10 are described in Table 1.

**Table 1:** Materials of an Composite Cushion Material

| Material | Specifications | commercial source | catalog number |
|---|---|---|---|
| warp-knitted rhombic sandwich fabric (as used in 1st layer) | Top surface layer and bottom surface layer: 100% PET multifilament yarn, 30D<br>Middle connecting layer: 100% PET multifilament yarn, 150D (0.1 mm diameter)<br>Thickness: 1.5 mm<br>Pattern: Rhombic | Shanghai Huaju Textile Co., Ltd. | HJ210408 |
| 3D nonwoven fabric (as used in 2nd layer) | 100% PET fiber<br>Thickness: 20 mm<br>Density 20 kg/m$^3$<br>Weight: 400 gsm | DEESTAR Fiber Technology Co., Ltd. | DS3DNWE3020 |
| EVA foam (as used in 3rd layer after perforation as in Example 4) | 45° hardness<br>Thickness: 13 mm<br>Density before perforation 50 kg/m$^3$<br>Weight before perforation: 650 gsm | Shanghai Moyuan Industrial Co., Ltd. | MYEVA45HC |
| warp-knitted mesh fabric (as used in 4th layer) | 100% PET multifilament yarn, comprising a first multifilament yarn that is 300D FDY) and a second multifilament yarn that is 75D/72F<br>Thickness: 0.5±0.05mm | Fujian Jinjiang Huayu Weaving Co., Ltd. | HN082501 |
| eco-friendly glue | comprises organosiloxane | Anhui East New Materials Co., Ltd. | L0877 |
|  | Total thickness: 35mm±1mm |  |  |

**Example 2:** Preparation of Warp-Knitted Sandwich Fabric

A warp knitted sandwich fabric is fabricated on a double needle bed warp knitting machine, for example a Karl Mayer (China) Ltd., Model No. HD6 /20-35.

**Example 3:** Preparation of 3D Nonwoven Fabric

A 3D nonwoven fabric is fabricated using vertical lap-forming and pendulum-type folding machine, for example a Qingdao Chenwei Machinery Co., Catalog No. LF3000KW, and a (conventional) non-woven heat setting machine for example a Qingdao Chenwei Machinery Co., Ltd, Catalog No. HS2000mm.

**Example 4:** Preparation of Perforated EVA Foam

Preparation of perforated EVA foam sheet:

45° (45HC) hardness EVA was foamed and cut to sheet a thickness of 13 mm. Density of the EVA foam sheet before perforation was 50kg/m$^3$. Weight of EVA foam before perforation was 650 gsm. A specially designed perforating mold was used to puncture regular holes on EVA foam sheet. The hole diameter is 6±0.6mm, and pitch of holes is 11±1.5mm. Weight of EVA foam after perforation was 250 gsm.

Machinery used to perforate the EVA foam sheet is as in Table 2 below. The perforating mold has two lines of punching needles. One punch creates two rows of holes in the EVA foam sheet. The machine feeds the EVA foam by the designed distance after each punch for the next punch.

Table 2. Equipment used for perforating EVA foam sheet

| Tool | commercial source | catalog number |
|---|---|---|
| Perforating machine | Dongguan Lianhong Machinery Co., Ltd | LH-1600 |
| specially designed perforating mold | Dongguan Hongtai hardware Co., Ltd | N/A (specially designed pattern) |

**Example 5:** Preparation of Warp-Knitted Mesh Fabric

A warp knitted mesh fabric is fabricated on a single-needle bed warp knitting machine, for example a Karl Mayer (China) Ltd., Model No. HKS 3-M.

**Example 6:** Combination of Warp-Knitted Sandwich Fabric, 3D Nonwoven Fabric, Perforated EVA Foam, and Warp-Knitted Mesh Fabric Into Composite Cushion Material and Post-Processing and Cutting

Composite cushion material shown in Figure 2A and tested in Examples 8 and 10 was prepared by this procedure.

Layers of the cushion material were adhered to each other using a glue (eco-friendly glue supplied by Anhui East New Materials Co., Ltd., L0877). Glued layers were bonded using a cold-bonding machine from Yancheng Xiehe Machinery Co., Ltd. SH-2010AB.

The pressed composite cushion was post-processed by cold-pressing using a cold-pressing machine from Dongguan Yuanju Machine Manufactory Co., Ltd, YJH01-01. Cold-pressing included two steps: 1) heat up the composite material in the oven; 2) press the heated material in the pressing machine. The pressing machine has no heating function, and thus this is called cold-pressing. The pressure used is about 50KPa to 20 MPa, depending on the thickness and the density of the material. The cold-pressed composite cushion material was cut using a knife cutting machine from Fuliyuan Machinery Co., Ltd, FLY-100T; knife cutting mold from Dongguan Hongtai hardware Co., Ltd.

**Example 7:** Post-Processing of Composite Cushion Material to set the material into a 3D shape

Post-processing of composite cushion material to set into a 3D shape is performed using equipment as in Table 3 below.

Table 3 Examples of Equipment for Post-Processing

| Tool | commercial source | catalog number |
|---|---|---|
| cold-pressing machine | Dongguan Yuanju Machine Manufactory Co., Ltd | YJH01-01 |
| heat-pressing machine | Pan Stone Hydraulic Indus. Co., Ltd. | XLB-Y5000 |
| ultrasonic welding machine | Changzhou Futan Machinery Co., Ltd | FT8000W |

(continued)

| Tool | commercial source | catalog number |
|---|---|---|
| high frequency welding machine | Shanghai Jiuluo Mechanical and Electrical Equipment Co., Ltd | JL-B10K |
| specially designed metal mold for pressing | Dongguan Hongtai hardware Co., Ltd | N/A (specially designed pattern) |

Table 4 shows exemplary conditions for heat pressing

**Table 4** Example of Post Processing

| Example of Heat-pressing condition for the sample | |
|---|---|
| Pressure | 70Kpa |
| Pressing time | 15s |
| Pressing board temperature | 225°C (middle) 230°C (side) |

Cutting along edge of cushion after pressing is performed using equipment as in Table 5 below.

**Table 5:** Examples of Equipment for Cutting

| Tool | commercial source | catalog number |
|---|---|---|
| knife cutting mold | Dongguan Hongtai hardware Co., Ltd | N/A (specially designed pattern) |
| knife cutting machine | Fuliyuan Machinery Co., Ltd | FLY-100T |
| laser cutting machine | Shandong Maichuang Smart Equipment Group Co., Ltd | 1630-100W |

Figure 3A shows an exemplary vulcanizing machine (Four Column Type Top Plunger Transfer Molding Machine from Pan Stone Hydraulic Indus. Co., Ltd, PV1002RT2PCD), Figure 3B shows a two-piece metal mold (comprising a top piece and a bottom piece) for pressing. Top panel of Figure 3B shows bottom piece of mold when machine is not pressing material), and bottom panel of Figure 3B shows top and bottom pieces of mold pressed together when machine is pressing the material. Material is put between the top and bottom plate during the pressing. Figures 3D-F are a schematic of post-processing. Metal mold is shown as hatched with wide-spaced right-leaning lines in Figure 3D left and middle panels. Pressed area in Figure 3D right panel is marked with an arrow. In Figure 3D, 1st layer (1) is hatched with narrow-spaced left-leaning lines, 2nd layer (2) is hatched with narrow-spaced right-leaning lines, 3rd layer (3) is hatched with wide-spaced left-leaning lines, and 4th layer (4) is shown as solid black. Exemplary post-processing heat-pressing steps as shown in Figure 3D are

3D: Before pressing (Figure 3D, left panel)

1. Fix the mold into the machine;

2. Set pressure, temperature, and pressing time;

3. Heat up the machine till required temperature;

4. Put the material into the machine

3E: During heat-pressing (Figure 3D, middle panel)
Press for desired time
3F: After heat-pressing (Figure 3D, right panel)
Take out the pressed material

**Example 8:** Measuring Breathability of Composite Cushion Material

ISO 11092: Textiles - Physiological effects - Measurement of thermal and water-vapor resistance under steady-state conditions (sweating guarded-hotplate test)

Breathability of composite cushion material was tested by this standard method,. Breathability of composite cushion material, 3D nonwoven material alone, perforated EVA alone, and imperforated EVA alone was tested.

**Table 6.** ISO 11092 Test Summary

| Test Principle | |
|---|---|
| Reference | ISO 11092 |
| Test Samples | **(A): 3D nonwoven** alone[100% PET, Thickness: 20 mm, Density 20 kg/m$^3$, Weight: 400 gsm; DEESTAR Fiber Technology Co., Ltd., DS3DNWE3020]<br>**(B): Perforated EVA alone** [45° hardness (45HC), Thickness: 13 mm, Density before perforation 50 kg/m$^3$ , Weight before perforation: 650 gsm, Hole Diameter 6±0.6mm, Pitch of Holes: 11±1.5mm; Shanghai Moyuan Industrial Co., Ltd.; MYEVA45HC]<br>**(C): Composite Cushion Material** [materials as in Example 1, Table 1, perforated as in Example 4, pressed and post-processed as in Example 6]<br>**(D): Imperforated EVA** alone [45° hardness (45HC), Thickness: 13 mm, Density 50 kg/m$^3$ , Weight: 650 gsm; Shanghai Moyuan Industrial Co., Ltd.; MYEVA45HC] |
| Test Equipment | Sweating Hotplate |
| Test Condition | Tplate= 35°C; Tair=35°C;<br>RH=40%; air speed= 1m/s |
| Results | Ret (Pa·m$^2$/W): water vapor resistance of unit area of a material |
| Result Explanation | The ability to prevent heat loss from sweat evaporation. The lower the Ret, the easier the water vapor transmission and more comfortable the clothing should be to wear. |

Figure 4A shows samples tested. From left to right, A) 3D nonwoven alone, (B) perforated EVA alone, (C) 4-layer composite cushion material, showing top view (1$^{st}$ layer showing) on left and bottom view (4$^{th}$ layer showing) on right, (D) imperforated EVA alone.

Results for 3D nonwoven alone (A), Perforated EVA alone (B), and Imperforate EVA alone (D)

Water Vapor Resistance

(ISO 11092:2014: Test Conditions:

1. Air temperature: 35.0±0.01°C

2. Relative humidity: 40±3%

3. Air speed: 1.0±0.05 m/s

4. Temperature of hotplate: 35.0±0.1°C

5. Orientation of test specimen: Specimens laid flat across the measurement unit with the side normally facing the human body towards the measuring unit. Fabric face side is in contact with hotplate.)

**Table 7.** Water Resistance Test Results for 3D nonwoven alone (A), Perforated EVA alone (B), and Imperforated EVA alone (D)

| | Unit | A 3D nonwoven | B Perforated EVA | D Imperforate EVA |
|---|---|---|---|---|
| Mean Water Vapor Resistance | $m^2$ Pa/W | 37.5 | 121 | >1000 |

Results for Composite Cushion Material (C)

Water Vapor Resistance

(ISO 11092:2014: Test Conditions:

1. Air temperature: $35.0\pm0.01°C$
2. Relative humidity: $40\pm3\%$
3. Air speed: $1.0\pm0.05$ m/s
4. Temperature of hotplate: $35.0\pm0.1°C$
5. Orientation of test specimen: Specimens laid flat across the measurement unit with the side normally facing the human body towards the measuring unit. The top surface of the composite cushion material (1st layer of composite cushion material) is in contact with hotplate.)

**Table 8.** Water Resistance Test Results for Composite Cushion Material (C)

| | Unit | C Composite Cushion Material |
|---|---|---|
| Mean Water Vapor Resistance | $m^2$ Pa/W | 131 |

Figure 4B is a bar graph showing water vapor resistance (Ret (Pa·$m^2$/W ) for each of (A) 3D nonwoven alone, (B) perforated EVA alone, (C) composite cushion material, (D) imperforate EVA alone.

Conclusion: The Composite Cushion Material with 3D nonwoven and perforated EVA material has lower Ret than imperforate EVA alone. The Composite Cushion Material has excellent breathability and thermal comfort.

**Example 9:** Measuring Compression Stress and Strain of 2-layer Composite Cushion Material

ISO 3386.1: Polymeric Materials, Cellular Flexible - Determination Of Stress-Strain Characteristics In Compression - Part 1 : Low-Density Materials

Compression stress and strain was tested by this standard method. Compression stress and strain of 3D nonwoven alone, perforated EVA alone, and 3D nonwoven + perforated EVA were tested.

**Table 9.** ISO3386-1 Test Summary

| Test Principle | |
|---|---|
| Reference | ISO 3386-1 |
| Test samples | **3D nonwoven** [100% PET, Thickness: 20 mm, Density 20 kg/m3, Weight: 400 gsm; DEESTAR Fiber Technology Co., Ltd., DS3DNWE3020]<br>**45° hardness perforated EVA** [45° hardness, Thickness: 13 mm, Density before perforation 50 kg/$m^3$ , Weight before perforation: 650 gsm, Hole Diameter $6\pm0.6$mm, Pitch of Holes: $11\pm1.5$mm; Shanghai Moyuan Industrial Co., Ltd.; MYEVA45HC]<br>**3D nonwoven + 45° hardness perforated EVA** (3D nonwoven + 45° hardness perforated EVA put together without glue and post processing).<br>[100% PET, Thickness: 20 mm, Density 20 kg/$m^3$, Weight: 400 gsm; DEESTAR Fiber Technology Co., Ltd., DS3DNWE3020] + [45° hardness, Thickness: 13 mm, Density before perforation 50 kg/$m^3$ , Weight before perforation: 650 gsm, Hole Diameter $6\pm0.6$mm, Pitch of Holes: $11\pm1.5$mm; Shanghai Moyuan Industrial Co., Ltd.; MYEVA45HC] |

(continued)

| Test Principle | |
|---|---|
| Reference | ISO 3386-1 |
| Test equipment | Instron 5967 |
| Test condition | 26°C ± 5 °C; 50 % ± 30% |
| Clamp diameter | 14.85cm |
| Distance between clamps | 60mm |
| Clamp compressing speed | 60mm/min |
| Result | Load at compressive extension 24mm, 36mm, 48mm |
| | Compressive extension at load 2000N |

**Table 10.** Results for 3D nonwoven alone:

| Specimen Number | Load at Preset point (Compressive extension 24 mm) | Load at Preset point (Compressive extension 36 mm) | Load at Preset point (Compressive extension 48 mm) | Compressive extension at Preset point (Load 2000 N) |
|---|---|---|---|---|
| | (N) | (N) | (N) | (mm) |
| 1 | 138.08 | 263.63 | 757.46 | N/A |
| 2 | 101.44 | 207.89 | 743.91 | N/A |
| 3 | 92.68 | 191.18 | 722.03 | N/A |
| 4 | 78.49 | 177.13 | 729.92 | N/A |

**Table 11.** Results for perforated EVA alone:

| Specimen Number | Load at Preset point (Compressive extension 24 mm) | Load at Preset point (Compressive extension 36 mm) | Load at Preset point (Compressive extension 48 mm) | Compressive extension at Preset point (Load 2000 N) |
|---|---|---|---|---|
| | (N) | (N) | (N) | (mm) |
| 1 | 1,639.47 | 3,010.29 | >5000 | 28.27 |
| 2 | 1,191.59 | 2,598.47 | >5000 | 32.13 |
| 3 | 1,089.80 | 2,461.89 | >5000 | 33.02 |
| 4 | 1,184.64 | 2,526.53 | >5000 | 32.49 |

**Table 12.** Results for 3D nonwoven + perforated EVA

| Specimen Number | Load at Preset point (Compressive extension 24 mm) | Load at Preset point (Compressive extension 36 mm) | Load at Preset point (Compressive extension 48 mm) | Compressive extension at Preset point (Load 2000 N) |
|---|---|---|---|---|
| | (N) | (N) | (N) | (mm) |
| 1 | 237.25 | 1238.30 | 3858.80 | 42.03 |
| 2 | 145.54 | 806.03 | 3679.42 | 43.67 |

(continued)

| Specimen Number | Load at Preset point (Compressive extension 24 mm) | Load at Preset point (Compressive extension 36 mm) | Load at Preset point (Compressive extension 48 mm) | Compressive extension at Preset point (Load 2000 N) |
|---|---|---|---|---|
| | (N) | (N) | (N) | (mm) |
| 3 | 113.61 | 689.85 | 3586.06 | 44.15 |
| 4 | 102.69 | 656.49 | 3490.03 | 44.42 |

Figures 5A, 5B, and 5C depict testing and results from ISO 3386-1 Compression Stress and Strain Tests. 5A (3D nonwoven alone), 5B (perforated EVA alone), 5C (3D nonwoven + EVA). Left panels of 5A-5C shows Instron 5967 test equipment and right panels of 5A-5C are graphs of extension vs. load. 4 specimens were tested for each material: 3D nonwoven alone, perforated EVA alone, and 3D nonwoven + EVA.

Conclusion: 3D nonwoven alone (5A) is soft, having large transformation under small load. Perforated EVA alone (5B) is hard, having small transformation under large load. When 3D nonwoven and perforated EVA are combined (5C), the material can have both soft touch and strong support.

**Example 10:** Measuring Compression Set of Composite Cushion Material

ISO 1856 Flexible cellular polymeric materials - Determination of compression set

Compression Set was tested by this standard method.

Compression set of 3D nonwoven alone, perforated EVA alone, and composite cushion material was tested.

**Table 13.** Compression Set Test Summary

| Test Principle | |
|---|---|
| Reference | ISO 1856 |
| Test samples | **3D nonwoven** [100% PET, Thickness: 20 mm, Density 20 kg/m3, Weight: 400 gsm; DEESTAR Fiber Technology Co., Ltd., DS3DNWE3020]<br>**45° hardness EVA** [45° hardness (45HC), Thickness: 13 mm, Density before perforation 50 kg/m$^3$ , Weight before perforation: 650 gsm, Hole Diameter 6$\pm$0.6mm, Pitch of Holes: 11$\pm$1.5mm; Shanghai Moyuan Industrial Co., Ltd.; MYEVA45HC]<br>**Composite Cushion Material** [materials as in Example 1, Table 1, perforated as in Example 4, pressed and post-processed as in Example 6] |
| Test equipment | Clamp tool |
| Test condition | (23 $\pm$ 1) °C, (50 $\pm$ 5) %; |
| Sample thickness before compression | **3D nonwoven** 20 mm<br>**45° hardness EVA** 13 mm<br>**Composite Cushion Material** 34 mm |
| Sample thickness under compression (50% of original thickness) | **3D nonwoven** 10 mm<br>**45° hardness EVA** 6.5 mm<br>**Composite Cushion Material** 17 mm |
| Test procedure | 1: 16h conditioning in (23 $\pm$ 1) °C, (50 $\pm$ 5) %;<br>2: 72h compressing in room, (23 $\pm$ 1)°C, (50 $\pm$ 5) %;<br>3:30min releasing in (23 $\pm$ 1) °C, (50 $\pm$ 5) %; |
| Result | Compression set<br>c.s.= $(d_0-d_r)/d_0$ *100% |

(continued)

| Test Principle | |
|---|---|
| Reference | ISO 1856 |
| | $d_0$ is the original thickness of the test piece; |
| | $d_r$ is the thickness of the test piece after recovery. |
| | The lower the compression set value(c.s.), the better the resilience and durability. |

Figures 6A, 6B, and 6C depict testing and results from ISO Compression Set Tests. 6A (3D nonwoven alone), 6B (perforated EVA alone), and 6C (composite cushion material). Left panels of 6A-6C show material before test, middle panels of 6A-6C show material during test, and right panels of 6A-6C show material after test, with measured thicknesses indicated.

Results 3D nonwoven alone

Thickness before test: 20 mm

Thickness during test: 10 mm

Test result:

Thickness after test = 17.5 mm

$$c.s.\ nw = (d_0 - d_r)/d_0 * 100\% = (20 - 17.5)/20 * 100\% = 12.5\%$$

Results Perforated EVA alone

Thickness before test: 13 mm

Thickness during test: 6.5 mm

Test result:

Thickness after test = 9.5 mm

$$c.s.\ EVA = (d0 - dr)/d0 * 100\% = (13 - 9.5)/13 * 100\% = 34.6\%$$

Results composite cushion material

Thickness before test: 34 mm

Thickness during test: 17 mm

Test result:

Thickness after test = 29 mm

$$c.s.\ composite = (d0 - dr)/d0 * 100\% = (34 - 29)/34 * 100\% = 14.7\%$$

**Conclusion:** 3D nonwoven alone (6A)has better compression set resistance than perforated EVA foam alone (6B). The Composite Cushion Material (6C) with 3D nonwoven in it has increased resilience and durability over perforated EVA foam alone (6B).

All patent filings, websites, other publications, and the like cited above or below are incorporated by reference in their entirety for all purposes to the same extent as if each individual item were specifically and individually indicated to be so incorporated by reference. The effective filing date means the earlier of the actual filing date or filing date of a priority application referring to the accession number if applicable. Likewise if different versions of a publication, website or the like are published at different times, the version most recently published at the effective filing date of the application is meant unless otherwise indicated. Any feature, step, element, embodiment, or aspect of the invention can be used in combination with any other unless specifically indicated otherwise. Although the present invention has been described in some detail by way of illustration and example for purposes of clarity and understanding, it will be apparent that certain changes and modifications may be practiced within the scope of the appended claims.

**Claims**

1.  A composite cushion material, the composite cushion material comprising four layers, a first layer, a second layer, a third layer, and a fourth layer, wherein the first layer comprises a warp-knitted sandwich fabric comprising a top surface layer, a bottom surface layer and a middle connecting layer, the second layer comprises a three-dimensional (3D) nonwoven fabric, the third layer comprises a perforated ethylene-vinyl acetate (EVA) foam, and the fourth layer comprises a warp-knitted mesh fabric;

    wherein the second layer is positioned between the first layer and the third layer, and
    wherein the third layer is positioned between the second layer and the fourth layer.

2.  The composite cushion material of claim 1, further comprising a glue between the between the first and second layers, between the second and third layers, and between the third and fourth layers, optionally wherein the glue comprises organosiloxane or chloroprene rubber (CR) polymer, further optionally wherein the composite cushion material is bonded by pressing.

3.  The composite cushion material of claim 1, wherein the four layers are sewn together with a thread, optionally wherein the thread is 80TEX polyester thread, 100TEX polyester thread, or 210TEX polyester thread.

4.  The composite cushion material of any one of claims 1-3,

    wherein the top surface layer and the bottom surface layer of the warp-knitted sandwich fabric comprise 100% PET multifilament yarn of a linear mass density of about 30D, the middle connecting layer comprises 100% PET multifilament yarn of a linear mass density of about 150D, the warp-knitted sandwich fabric has a thickness of about 1.5 mm, and the warp-knitted fabric has a rhombic pattern, or
    wherein the 3D nonwoven material comprises 100% PET fiber, has a thickness of about 20 mm, and has a density of about 20 kg/m$^3$, or
    wherein the perforated EVA foam has a hardness of about 45HC, has a thickness of about 13 mm, has a density before perforation of about 50 kg/m$^3$, and has holes of a diameter of about 6±0.6mm and a pitch of about 11±1.5mm, or
    wherein the warp-knitted mesh fabric comprises 100% PET multifilament yarn comprising a 300D FDY multifilament yarn and a 75D/72F multifilament yarn, has a thickness of about 0.5 mm, and has a hexagonal pattern.

5.  The composite cushion material of any one of claims 1-3, wherein:

    the top surface layer and the bottom surface layer of the warp-knitted sandwich fabric comprise 100% PET multifilament yarn of a linear mass density of about 30D, the middle connecting layer of the of the warp-knitted sandwich fabric comprises 100% PET multifilament yarn of a linear mass density of about 150D, the warp-knitted sandwich fabric has a thickness of about 1.5 mm, and the warp-knitted sandwich fabric has a rhombic pattern;
    the 3D nonwoven material comprises 100% PET fiber, has a thickness of about 20 mm, and has a density of about 20 kg/m$^3$;
    the perforated EVA foam has a hardness of about 45HC, has a thickness of about 13 mm, has a density before perforation of about 50 kg/m$^3$, and has holes of a diameter of about 6±0.6mm and a pitch of about 11±1.5mm; and
    the warp-knitted mesh fabric comprises 100% PET multifilament yarn comprising a 300D FDY multifilament yarn and a 75D/72F multifilament yarn, has a thickness of about 0.5 mm, and has a hexagonal pattern.

6.  The composite cushion material of any one of claims 1-5, wherein the composite cushion material is processed in a mold to impart a three-dimensional shape to the composite cushion material, optionally wherein the composite cushion material is processed by cold pressing, heat pressing, ultrasonic welding, or high frequency welding.

7. The composite cushion material of any one of claims 1-5, wherein the composite cushion material is processed in a mold to impart a three-dimensional shape to the composite cushion material and cut along an edge of the composite cushion material, optionally wherein the composite cushion material is cut with a knife cutting mold or by laser cutting.

8. A method for manufacturing a composite cushion material comprising four layers, the method comprising:

(a) providing a first layer, a second layer, a third layer, and a fourth layer, wherein the first layer comprises a warp-knitted sandwich fabric comprising a top surface layer, a bottom surface layer and a middle connecting layer, the second layer comprises a three-dimensional (3D) nonwoven fabric, the third layer comprises a perforated ethylene-vinyl acetate (EVA) foam, and the fourth layer comprises a warp-knitted mesh fabric;
(b) assembling the layers such that that the second layer is positioned between the first layer and the third layer, and the third layer is positioned between the second layer and the fourth layer;
(c) applying a glue between the first layer and the second layer, between the second layer and the third layer, and between the third layer and the fourth layer, to provide a glued composite material; and
(e) pressing the glued composite material to bond the first layer, second layer, third layer, and fourth layer to produce the composite cushion material.

9. A method for manufacturing a composite cushion material comprising four layers, the method comprising:

(a) providing a first layer, a second layer, a third layer, and a fourth layer, wherein the first layer comprises a warp-knitted sandwich fabric comprising a top surface layer, a bottom surface layer and a middle connecting layer, the second layer comprises a three-dimensional (3D) nonwoven fabric, the third layer comprises a perforated ethylene-vinyl acetate (EVA) foam, and the fourth layer comprises a warp-knitted mesh fabric;
(b) assembling the layers such that that the second layer is positioned between the first layer and the third layer, and the third layer is positioned between the second layer and the fourth layer;
(c) sewing together the four layers to produce the composite cushion material

10. The method of any one of claims 8-9,

wherein the top surface layer and the bottom surface layer of the warp-knitted sandwich fabric comprise 100% PET multifilament yarn of a linear mass density of about 30D, the middle connecting layer comprises 100% PET multifilament yarn of a linear mass density of about 150D, the warp-knitted sandwich fabric has a thickness of about 1.5 mm, and the warp-knitted fabric has a rhombic pattern, or
wherein the 3D nonwoven material comprises 100% PET fiber, has a thickness of about 20 mm, and has a density of about 20 kg/m$^3$, or
wherein the perforated EVA foam has a hardness of about 45HC, has a thickness of about 13 mm, has a density before perforation of about 50 kg/m$^3$, and has holes of a diameter of about 6±0.6mm and a pitch of about 11±1.5m, or
wherein the warp-knitted mesh fabric comprises 100% PET multifilament yarn comprising a 300D FDY multifilament yarn and a 75D/72F multifilament yarn, has a thickness of about 0.5 mm, and has a hexagonal pattern.

11. The method of any one of claims 8-9, wherein:

the top surface layer and the bottom surface layer of the warp-knitted sandwich fabric comprise 100% PET multifilament yarn of a linear mass density of about 30D, the middle connecting layer of the of the warp-knitted sandwich fabric comprises 100% PET multifilament yarn of a linear mass density of about 150D, the warp-knitted sandwich fabric has a thickness of about 1.5 mm, and the warp-knitted sandwich fabric has a rhombic pattern;
the 3D nonwoven material comprises 100% PET fiber, has a thickness of about 20 mm, and has a density of about 20 kg/m$^3$;
the perforated EVA foam has a hardness of about 45HC, has a thickness of about 13 mm, has a density before perforation of about 50 kg/m$^3$, and has holes of a diameter of about 6±0.6mm and a pitch of about 11±1.5mm; and
the warp-knitted mesh fabric comprises 100% PET multifilament yarn comprising a 300D FDY multifilament yarn and a 75D/72F multifilament yarn, has a thickness of about 0.5 mm, and has a hexagonal pattern.

12. The method of any one of claims 8-11, further comprising processing the composite cushion material in a mold to impart a three-dimensional shape to the composite cushion material, optionally further comprising cutting along an edge of the processed composite cushion material, further optionally wherein the processing is cold pressing, heat pressing, ultrasonic welding, or high frequency welding.

**13.** The method of claim 12, wherein the cutting is with a knife cutting mold, optionally wherein the cutting is laser cutting.

**14.** An article of manufacture comprising the composite cushion material of any one of claims 1-7.

**15.** The article of manufacture of claim 14, wherein the article of manufacture is an item of clothing, optionally wherein the item of clothing is a safety harness, further optionally wherein the safety harness comprises a padding, further optionally wherein the padding comprises the composite cushion material.

FIG. 1A          FIG. 1B          FIG. 1C

EP 4 427 921 A1

GB1: 2 THREADED, 2 LEFT GB2: 1 THREADED, 2 LEFT, 1 THREADED

**FIG. 2D**

GB3: 2 THREADED, 8 LEFT    GB4: 1 THREADED, 8 LEFT, 1 THREADED

GB1, GB5: FULL THREADED    GB2, GB6: FULL THREADED

**FIG. 2E**

1.5 mm

0.5 mm

20 mm

13 mm

**FIG. 2A**

5 mm

**FIG. 2B**

PRESSED AREA

**FIG. 2C**

FIG. 3A

FIG. 3B

FIG. 3C

FIG. 3D

PRESSED AREA

EP 4 427 921 A1

FIG. 4A

RET (Pa·m2/W)

FIG. 4B

**SINGLE 3D NONWOVEN**

TOO SOFT

SPECIMEN #
1
2
3
4

LOAD [N] / EXTENSION [mm]

**FIG. 5A**

**EVA**

TOO HARD

SPECIMEN #
1
2
3
4

LOAD [N] / EXTENSION [mm]

**FIG. 5B**

**3D NONWOVEN + EVA**

MULTISTEP SOFTNESS AND SUPPORT

SPECIMEN #
1
2
3
4

1-SOFT TOUCH    2-STRONG SUPPORT
LOAD [N] / EXTENSION [mm]

**FIG. 5C**

FIG. 6A

FIG. 6B

FIG. 6C

Europäisches Patentamt

European Patent Office

Office européen des brevets

# EUROPEAN SEARCH REPORT

**Application Number**

EP 24 15 4859

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2012/186433 A1 (BRAIEWA ROBERT JOSEPH [US] ET AL) 26 July 2012 (2012-07-26) * paragraphs [0002], [0003], [0017], [0026], [0034], [0037], [0067], [0073] * * claims 1,5 * * figure 3 * | 1-15 | INV. B32B3/26 B32B5/02 B32B5/18 B32B5/24 B32B7/09 B32B7/12 |
| A | US 2013/244526 A1 (WYNER DANIEL M [US] ET AL) 19 September 2013 (2013-09-19) * paragraphs [0009], [0056], [0062] * | 1-15 | |

**TECHNICAL FIELDS SEARCHED (IPC)**

B32B

The present search report has been drawn up for all claims

| Place of search | Date of completion of the search | Examiner |
|---|---|---|
| The Hague | 26 June 2024 | Yu, Sze Man |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 15 4859

This annex lists the patent family members relating to the patent documents cited in the above-mentioned European search report.
The members are as contained in the European Patent Office EDP file on
The European Patent Office is in no way liable for these particulars which are merely given for the purpose of information.

26-06-2024

| Patent document cited in search report | | Publication date | Patent family member(s) | | Publication date |
|---|---|---|---|---|---|
| US 2012186433 | A1 | 26-07-2012 | US | 2012186433 A1 | 26-07-2012 |
| | | | WO | 2010117811 A2 | 14-10-2010 |
| US 2013244526 | A1 | 19-09-2013 | CA | 2868027 A1 | 26-09-2013 |
| | | | CN | 104321189 A | 28-01-2015 |
| | | | EP | 2828074 A1 | 28-01-2015 |
| | | | GB | 2516184 A | 14-01-2015 |
| | | | JP | 2015512358 A | 27-04-2015 |
| | | | JP | 2018131724 A | 23-08-2018 |
| | | | KR | 20140142301 A | 11-12-2014 |
| | | | RU | 2014141977 A | 20-05-2016 |
| | | | US | 2013244526 A1 | 19-09-2013 |
| | | | US | 2017036416 A1 | 09-02-2017 |
| | | | WO | 2013142523 A1 | 26-09-2013 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20040142619 A1
- CN 211334932 U
- US 20200360210 A1
- WO 2012071581 A2
- CN 1799870 A